# EUROPÄISCHE PATENTSCHRIFT

(11) **EP 2 379 570 B1**
(45) Veröffentlichungstag und Bekanntmachung des Hinweises auf die Patenterteilung: **21.01.2015**
(21) Anmeldenummer: 09778842.6
(22) Anmeldetag: 06.10.2009
(51) Int. Cl.: C07F 9/30, C07F 9/48, C08K 5/53, C09K 21/12, C07F 9/38, C07F 9/40

(54) **VERFAHREN ZUR HERSTELLUNG VON ALKYLPHOSPONSÄUREN, -ESTERN UND -SALZEN MITTELS OXIDATION VON ALKYLPHOSPHONIGSÄUREN UND IHRE VERWENDUNG**
METHOD FOR THE PRODUCTION OF ALKYLPHOSPHONIC ACIDS, ESTERS, AND SALTS BY OXIDIZING ALKYLPHOSPHONOUS ACIDS, AND USE THEREOF
PROCÉDÉ DE FABRICATION D'ACIDES, D'ESTERS ET DE SELS ALKYLPHOSPHONIQUES PAR OXYDATION D'ACIDES ALKYLPHOSPHONIQUES ET LEUR UTILISATION

(30) Priorität: 18.12.2008 DE 102008063668
(43) Veröffentlichungstag der Anmeldung: 26.10.2011
(73) Patentinhaber: Clariant Finance (BVI) Limited, Road Town, Tortola (VG)
(72) Erfinder: HILL, Michael, 22043 Hamburg (DE); KRAUSE, Werner, 50354 Hürth (DE); SICKEN, Martin, 51149 Köln (DE)
(74) Vertreter: Hütter, Klaus
(86) Internationale Anmeldenummer: PCT/EP2009/007142
(87) Internationale Veröffentlichungsnummer: WO 2010/069418

(56) Entgegenhaltungen:
- EP-A1- 0 906 915
- WO-A2-2005/014604
- WO-A2-2005/032494
- AT-B- 243 952
- DE-A1- 1 494 922
- DE-A1- 2 441 878
- DE-A1- 2 623 775
- US-A- 4 235 991
- US-A- 5 391 743
- US-B1- 6 214 812
- MONTCHAMP J L: "Recent advances in phosphorus-carbon bond formation: synthesis of H-phosphinic acid derivatives from hypophosphorous compounds" JOURNAL OF ORGANOMETALLIC CHEMISTRY, ELSEVIER-SEQUOIA S.A. LAUSANNE, CH, Bd. 690, Nr. 10, 16. Mai 2005 (2005-05-16) , Seiten 2388-2406, XP004877374 ISSN: 0022-328X
- SYLVINE DEPRÈLE ET AL: "Palladium-Catalyzed Hydrophosphinylation of Alkenes and Alkynes" JOURNAL OF THE AMERICAN CHEMICAL SOCIETY, AMERICAN CHEMICAL SOCIETY, WASHINGTON, DC. US, Bd. 124, Nr. 32, 1. Januar 2002 (2002-01-01), Seite 9387, XP002500862 ISSN: 0002-7863
- BRAVO-ALTAMIRANO ET AL: "A novel approach to phosphonic acids from hypophosphorous acid" TETRAHEDRON LETTERS, ELSEVIER, AMSTERDAM, NL, Bd. 48, Nr. 33, 19. Juli 2007 (2007-07-19) , Seiten 5755-5759, XP022163552 ISSN: 0040-4039
- SYLVINE DEPRÈLE ET AL: "Environmentally Benign Synthesis of H-Phosphinic Acids Using a Water-Tolerant, Recyclable Polymer-Supported Catalyst" ORGANIC LETTERS, AMERICAN CHEMICAL SOCIETY, US, Bd. 6, Nr. 21, 1. Januar 2004 (2004-01-01) , Seiten 3805-3808, XP002500861 ISSN: 1523-7060 [gefunden am 2004-09-18]
- PATRICE RIBIÈRE ET AL: "NiCl2-Catalyzed Hydrophosphinylation" JOURNAL OF ORGANIC CHEMISTRY, AMERICAN CHEMICAL SOCIETY, EASTON.; US, Bd. 70, Nr. 10, 1. Januar 2005 (2005-01-01), Seiten 4064-4072, XP002530191 ISSN: 0022-3263
- SASSE K ED - SASSE K: "Houben -Weyl Methoden der Organischen Chemie" 1. Januar 1963 (1963-01-01), ORGANISCHE PHOSPHOR-VERBINDUNGEN; [METHODEN DER ORGANISCHEN CHEMIE], STUTTGART, G. THIEME VERLAG, DE, PAGE(S) 257-259,261,294-301 , XP002500739 B. Umwandlung; Seite 301
- "1" In: SASSE K ED - SASSE K: "Houben -Weyl Methoden der Organischen Chemie" 1. Januar 1963 (1963-01-01), ORGANISCHE PHOSPHOR-VERBINDUNGEN; [METHODEN DER ORGANISCHEN CHEMIE], STUTTGART, G. THIEME VERLAG, DE , XP002564325 Bd. XII, , Seite 358 das ganze Dokument
- M. Regitz: "Houben -Weyl Methoden der Organischen Chemie" 1. Januar 1982 (1982-01-01), ORGANISCHE PHOSPHOR-VERBINDUNGEN; [METHODEN DER ORGANISCHEN CHEMIE], STUTTGART, G. THIEME VERLAG, DE , XP002564334 Bd. E2, , Seiten 308-309 Kapitel 2.2
- YAMAGISHI T ET AL: "Lipase-catalyzed kinetic resolution of alpha-hydroxy-H-phosphinates" TETRAHEDRON LETTERS, ELSEVIER, AMSTERDAM, NL, Bd. 45, Nr. 36, 30. August 2004 (2004-08-30), Seiten 6713-6716, XP004556626 ISSN: 0040-4039
- ANDERSON ET AL.: "Antidiabetic agents: a new class of reversible carnitine palmitoyltransferase I inhibitors" J. MED. CHEM., Bd. 38, Nr. 18, 1995, Seiten 3448-3450, XP002564326
- KARANEWSKY D S ET AL: "SYNTHESIS OF PHOSPHONIC MONOESTERS FROM PHOSPHONOUS ACIDS" TETRAHEDRON LETTERS, ELSEVIER, AMSTERDAM, NL, Bd. 27, Nr. 16, 1. Januar 1986 (1986-01-01), Seiten 1751-1754, XP001084930 ISSN: 0040-4039

## Beschreibung

Die Erfindung betrifft ein Verfahren zur Herstellung von Alkylphosponsäuren, -estern und -salzen mittels Oxidation von Alyklphosphonigsäuren und ihre Verwendung.

Nach S. Depréle et al., J. Am. Chem. Soc., Bd. 124, Nr. 32, 01.01.2002, Seite 9387, wird hypophosphorige Säure in wässriger Form mit Olefinen, die mindestens 8 C-Atome aufweisen oder mit Alkinen, die ebenfalls mindestens 8 C-Atome aufweisen zu den entsprechenden P-Verbindungen, die dann ebenfalls mindestens 8 C-Atome enthalten, umgesetzt.

Bisher fehlt es an Verfahren zur Herstellung von Alyklphosphonsäuren, -estern und -salzen, die wirtschaftlich und großtechnisch zugänglich sind und die insbesondere eine hohe Raum-/Zeitausbeute ermöglichen. Auch fehlt es an Verfahren, die ohne störende Halogenverbindungen als Edukte ausreichend effektiv sind und zudem an solchen, bei denen die Endprodukte leicht erhalten bzw. isoliert werden können oder auch unter gezielten Reaktionsbedingungen (wie etwa einer Umesterung) gezielt und gewünscht hergestellt werden können.

Diese Aufgabe wird gelöst durch ein Verfahren zur Herstellung von zur Herstellung von Alkylphosphonsäuren, -estern und -salzen, dadurch gekennzeichnet, dass man
a) eine Phosphinsäurequelle (I) 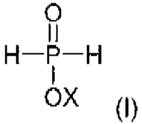 mit Olefinen (IV) 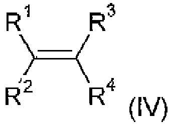 in Gegenwart eines Katalysators A zu einer Alkylphosphonigsäure, deren Salz oder Ester (II) 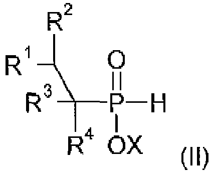 umsetzt und
b) die so entstandene Alkylphosphonigsäure, deren Salz oder Ester (II) mit einem Oxidationsmittel oder mit einem Oxidationsmittel und Wasser wobei es sich bei den Oxidationsmitteln um Braunstein, Chromtrioxid, Kaliumdichromat, Pyridindichromat, Pyridinchlorchromat, Collins-Reagenz, Jones-Reagenz, Corey-Gilman-Ganem-Reagenz, (Dess-Martin)-Periodinan, o-Iodoxy-benzoesäure, Rutheniumtetroxid, Rutheniumdioxid, Tetra-n-propyl-perruthenat, Rutheniumtrichlorid/Natriumperiodat, Rutheniumdioxid/Natrium-periodat, Chlor, Hypochlorit, Persäuren und/oder Peroxo-Verbindungen handelt, oder in Gegenwart eines Katalysators B mit Sauerstoff und Wasser zum Alkylphosphonsäurederivat (III) 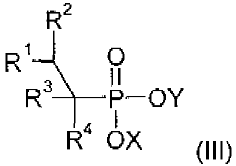 umsetzt, die nach Schritt a) erhaltene Alkylphosphonigsäure, deren Salz oder Ester (II) und/oder die nach Schritt b) erhaltene Alkylphosphonsäure, deren Salz oder Ester (III) und/oder die jeweils resultierende Reaktionslösung davon mit einem Alkylenoxid oder einem Alkohol M-OH und/oder M'-OH verestert, und der jeweils entstandene Alkylphosphonigsäureester (II) und/oder Alkylphosphonsäureester (III) dem weiteren Reaktionsschritten b) unterwerfen, wobei R¹, R², R³, R⁴ gleich oder verschieden sind und unabhängig voneinander H, C₁-C₁₈-Alkyl, C₆-C₁₈-Aryl, C₆-C₁₈-Aralkyl, C₆-C₁₈-Alkyl-Aryl bedeuten und wobei die Gruppen C₆-C₁₈-Aryl, C₆-C₁₈-Aralkyl und C₆-C₁₈-Alkyl-Aryl mit C(O)CH₃, OH, CH₂OH, NH₂, NO₂, OCH₃, SH und/oder OC(O)CH₃ substituiert sein können und X und Y gleich oder verschieden sind und unabhängig voneinander für H, C₁-C₁₈-Alkyl, C₆-C₁₈-Aryl, C₆-C₁₈-Aralkyl, C₆-C₁₈-Alkyl-Aryl und/oder für Mg, Ca, Al, Sb, Sn, Ge, Ti, Fe, Zr, Zn, Ce, Bi, Sr, Mn, Cu, Ni, Li, Na, K und/oder eine protonierte Stickstoffbase stehen und es sich bei den Katalysatoren A und B um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen.

Bevorzugt wird die nach Schritt b) erhaltene Alkylphosphonsäure, deren Salz oder Ester (III) anschließend in einem Schritt c) mit Metallverbindungen von Mg, Ca, Al, Sb, Sn, Ge, Ti, Fe, Zr, Zn, Ce, Bi, Sr, Mn, Li, Na, K und/oder einer protonierte Stickstoffbase zu den entsprechenden Alkylphosphonsäuresalzen (III) dieser Metalle und/oder einer Stickstoffverbindung umgesetzt.

Bevorzugt sind R¹, R², R³, R⁴ gleich oder verschieden und bedeuten, unabhängig voneinander H, Methyl, Ethyl, n-Propyl, Isopropyl, n-Butyl, Isobutyl, tert. Butyl und/oder Phenyl.

Bevorzugt sind X und Y gleich oder verschieden und bedeuten jeweils H, Li, Na, K, Ca, Mg, Al, Zn, Ti, Fe, Methyl, Ethyl, n-Propyl, Isopropyl, n-Butyl, Isobutyl, tert.-Butyl, Phenyl, Ethylenglykol, Propylglykol, Butylglykol, Pentylglykol, Hexylglykol, Allyl und/oder Glycerin.

Bevorzugt handelt es sich bei den Übergangsmetallen und/oder Übergangsmetallverbindungen um solche aus der ersten, siebten und achten Nebengruppe.

Bevorzugt handelt es sich bei den Übergangsmetallen und/oder Übergangsmetallverbindungen um Rhodium, Nickel, Palladium, Platin, Ruthenium und/oder Gold.

Bevorzugt handelt es bei dem Alkohol der allgemeinen Formel M-OH um lineare oder verzweigte, gesättigte und ungesättigte, einwertige organische Alkohole mit einer Kohlenstoffkettenlänge von C₁-C₁₈ und bei dem Alkohol der allgemeinen Formel M'-OH um lineare oder verzweigte, gesättigte und ungesättigte, mehrwertige organische Alkohole mit einer Kohlenstoffkettenlänge von C₁-C₁₈.

Die Erfindung betrifft auch die Herstellung von Alkylphosphonsäure, -estern und -salzen (III) nach einem oder mehreren der Ansprüche 1 bis 7 und die anschließende Verwendung dieser Produkte als Zwischenprodukt für weitere Synthesen, als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, als Säurefänger, als Flammschutzmittel, in Wasch- und Reinigungsmittelanwendungen, in Elektronikanwendungen.

Die Erfindung betrifft ebenfalls die Herstellung von Alkylphosphonsäuresalzen (III), die nach einem oder mehreren der Ansprüche 1 bis 7 und die anschließende Verwendung dieser Produkte als Säurefänger in einem Polymer und einer Menge von 0,0001 bis 5 Gew.-%, bevorzugt 0,01 bis 2 Gew.-%, mehr bevorzugt 0,025 bis 1 Gew.-% und besonders bevorzugt 0,05 bis 0,5 Gew.-% bezogen auf das jeweilige Polymer.

Die Erfindung betrifft ebenfalls die Herstellung von Alkylphosphonsäuresalzen (III) nach einem oder mehreren der Ansprüche 1 bis 7 und die anschließende Verwendung dieser Produkte in Gemischen mit "klassischen Säurefängern" als Säurefänger in einem Polymer und einer Menge des Gemisches von 0,0001 bis 5 Gew.-%, bevorzugt 0,01 bis 2 Gew.-%, mehr bevorzugt 0,025 bis 1 Gew.-% und besonders bevorzugt 0,05 bis 0,5 Gew.-% bezogen auf das jeweilige Polymer.

Die Erfindung betrifft ebenfalls die Herstellung flammgeschützer thermoplastischer oder duroplastischer Formkörper und -massen, -Filme, -Fäden und -Fasern enthaltend 5 bis 30 Gew.-% der Alkylphosphonsäure/-ester/-salze (III), hergestellt nach einem oder mehreren der Ansprüche 1 bis 7, 5 bis 80 Gew.-% Polymer oder Mischungen derselben, 5 bis 40 Gew.-% Additive und 5 bis 40 Gew.-% Füllstoff, wobei die Summe der Komponenten 100 Gew.-% beträgt.

Bevorzugt wird das Katalysatorsystem A und B jeweils durch Umsetzung von einem Übergangsmetalle und/oder einer Übergangsmetallverbindung und mindestens einem Liganden gebildet.

Alle vorgenannten Umsetzungen können auch stufenweise ausgeführt werden; ebenso können in den verschiedenen Verfahrensschritten auch die jeweiligen resultierenden Reaktionslösungen eingesetzt werden.

Handelt es sich bei der Alkylphosphonsäure (III) nach Schritt b) um einen Ester, so kann bevorzugt eine saure oder basische Hydrolyse durchgeführt werden, um die freie Alkylphosphonsäure oder deren Salz zu erhalten.

Bevorzugt handelt es sich bei der Alkylphosphonsäure um Ethyl-, Propyl-, i-Propyl-, Butyl-, sec-Butyl-, i-Butyl-, Pentyl-, Hexyl-, Heptyl-, Octyl-, Decyl-, Dodecyl-, Hexadecyl-, Heptadecyl-, Octadecyl- und/oder Eicosylphosphonsäure.

Bevorzugt handelt es sich bei dem Alkylphosphonsäureester um einen Mono- oder Di-Propionsäure-, Methyl-, Ethyl-; i-Propyl-; Butyl-, Phenyl-; 2-Hydroxyethyl-, 2-Hydroxypropyl-, 3-Hydroxypropyl-, 4-Hydroxybutyl- und/oder 2,3-Dihydroxy-propylester der vorgenannten Alkylphosphonsäuren oder Mischungen davon.

Bevorzugt handelt es sich bei dem Alkylphosphonsäure-Salz um ein Natrium-, Kalium-, Magnesium-, Calcium-, Barium-, Aluminium(III)-, Cer(III)-, Ti(IV)-und/oder Zink(II)salz der vorgenannten Alkylphosphonsäuren oder -ester.

Bevorzugt handelt es sich bei den Übergangsmetallen für den Katalysator A um Elemente der siebten und achten Nebengruppe (nach moderner Nomenklatur ein Metall der Gruppe 7, 8, 9 oder 10), wie etwa Rhenium, Ruthenium, Cobalt, Rhodium, Iridium, Nickel, Palladium, Platin.

Bevorzugt werden als Quelle der Übergangsmetalle und Übergangsmetallverbindungen deren Metallsalze verwendet. Geeignete Salze sind solche von Mineralsäuren, die die Anionen Fluorid, Chlorid, Bromid, Iodid, Fluorat, Chlorat, Bromat, Iodat, Fluorit, Chlorit, Bromit, lodit, Hypofluorit, Hypochlorit, Hypobromit, Hypoiodit, Perfluorat, Perchlorat, Perbromat, Periodat, Cyanid, Cyanat, Nitrat, Nitrid, Nitrit, Oxid, Hydroxid, Borat, Sulfat, Sulfit, Sulfid, Persulfat, Thiosulfat, Sulfamat, Phosphat, Phosphit, Hypophosphit, Phosphid, Carbonat und Sulfonat, wie etwa Methansulfonat, Chlorosulfonat, Fluorosulfonat, Trifluoromethansulfonat, Benzol-sulfonat, Naphthylsulfonat, Toluolsulfonat, t-Butylsulfonat, 2-Hydroxypropansulfonat und sulfonierte lonentauscherharze; und/oder organische Salze, wie etwa Acetyacetonate und Salze einer Carbonsäure mit bis zu 20 Kohlenstoffatomen, wie etwa Format, Acetat, Propionat, Butyrat, Oxalat, Stearat und Zitrat einschliesslich halogenierter Carbonsäuren mit bis zu 20 Kohlenstoffatomen, wie etwa Trifluoracetat, Trichloracetat, enthalten.

Eine weitere Quelle der Übergangsmetalle und Übergangsmetallverbindungen stellen Salze der Übergangsmetalle mit Tetraphenylborat- und halogenierten Tetraphenylboratanionen, wie etwa Perfluorophenylborat, dar.

Geeignete Salze beeinhalten ebenso Doppelsalze und Komplexsalze bestehend aus einem oder mehreren Übergangsmetallionen und unabhängig voneinander ein oder mehrere Alkalimetall-, Erdalkalimetall-, Ammonium-, organische Ammonium-, Phosphonium- und organische Phosphoniumionen und unabhängig voneinander ein oder mehrere oben genannter Anionen. Geeignete Doppelsalze stellen z. B. Ammoniumhexachloropalladat und Ammoniumtetrachloropalladat dar.

Bevorzugt ist eine Quelle der Übergangsmetalle das Übergangsmetall als Element und/oder eine Übergangsmetallverbindung in dessen null-wertigem Zustand.

Bevorzugt wird das Übergangsmetall metallisch eingesetzt oder als Legierung mit weiteren Metallen verwendet, wobei hier Bor, Zirconium, Tantal, Wolfram, Rhenium, Kobalt, Iridium, Nickel, Palladium, Platin und/oder Gold bevorzugt ist. Dabei ist der Übergangsmetallgehalt in der eingesetzten Legierung bevorzugt 45 - 99,95 Gew.-%.

Bevorzugt wird das Übergangsmetall mikrodispers (Teilchengröße 0,1 mm - 100 µm) eingesetzt.

Bevorzugt wird das Übergangsmetall auf einem Metalloxid wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur, auf einem Metallcarbonat wie etwa Bariumcarbonat, Calciumcarbonat, Strontiumcarbonat, auf einem Metallsulfat wie etwa Bariumsulfat, Calciumsulfat, Strontiumsulfat, auf einem Metallphosphat wie etwa Aluminiumphosphat, Vanadiumphosphat, auf einem Metallcarbid wie etwa Siliconcarbid, auf einem Metallaluminat wie etwa Calciumaluminat, auf einem Metallsilikat wie etwa Aluminiumsilikat, Kreiden, Zeolithe, Bentonit, Montmorillonit, Hectorit, auf funktionalisierten Silikaten, funktionalisierten Silikagelen wie etwa SiliaBond^{®}, QuadraSil™, auf funktionalisierten Polysiloxanen wie etwa Deloxan^{®}, auf einem Metallnitrid, auf Kohle, Aktivkohle, Mullite, Bauxite, Antimonite, Scheelite, Perovskite, Hydrotalcite, Heteropolyanionen, auf funktionalisierter und unfunktionalisierter Cellulose, Chitosan, Keratin, Heteropolyanionen, auf Ionentauschern wie etwa Amberlite™, Amberjet™, Ambersep™, Dowex^{®}, Lewatit^{®}, ScavNet^{®}, auf funktionalisierten Polymeren wie etwa Chelex^{®}, QuadraPure™, Smopex^{®}, PolyOrgs^{®}, auf polymergebundenen Phosphanen, Phosphanoxiden, Phosphinaten, Phosphonaten, Phosphaten, Aminen, Ammoniumsalzen, Amiden, Thioamiden, Harnstoffen, Thioharnstoffen, Triazinen, Imidazolen, Pyrazolen, Pyridinen, Pyrimidinen, Pyrazinen, Thiolen, Thiolether, Thiolester, Alkoholen, Alkoxiden, Ether, Ester, Carbonsäuren, Acetaten, Acetalen, Peptiden, Hetarenen, Polyethylenimin/Siliciumdioxid und/oder Dendrimeren geträgert verwendet.

Geeignete Quellen der Metallsalze und/oder Übergangsmetalle stellen bevorzugt ebenfalls deren Komplexverbindungen dar. Komplexverbindungen der Metallsalze und/oder Übergangsmetalle setzen sich aus den Metallsalzen bzw. Übergangsmetalle und einem oder mehreren Komplexbildnern zusammen. Geeignete Komplexbildner sind z. B. Olefine, Diolefine, Nitrile, Dinitrile, Kohlenmonoxid, Phosphine, Diphosphine, Phosphite, Diphosphite, Dibenzylidenaceton, Cyclopentadienyl, Indenyl oder Styrol. Geeignete Komplexverbindungen der Metallsalze und/oder Übergangsmetalle können auf den oben genannten Trägermaterialien geträgert sein.

Bevorzugt ist der Gehalt an den genannten geträgerten Übergangsmetallen 0,01 bis 20 Gew.-%, vorzugsweise 0,1 bis 10 Gew.-%, insbesondere 0,2 bis 5 Gew.-%, bezogen auf die Gesamtmasse des Trägermaterials.

Geeignete Quellen von Übergangsmetallen und Übergangsmetallverbindungen sind beispielsweise Palladium, Platin, Nickel, Rhodium; Palladium, Platin, Nickel oder Rhodium, auf Alumina, auf Silika, auf Bariumcarbonat, auf Bariumsulfat, auf Calciumcarbonat, auf Strontiumcarbonat, auf Kohle, auf Aktivkohle; Platin-Palladium-Gold-, Aluminum-Nickel-, Eisen-Nickel-, Lanthanoid-Nickel, Zirconium-Nickel-, Platin-Iridium-, Platin-Rhodium-Legierung; Raney^{®}-Nickel, Nickel-Zink-Eisen-Oxid; Palladium(II)-, Nickel(II)- ,Platin(II)-, Rhodiumchlorid, -bromid, -iodid, -fluorid, -hydrid, -oxid, -peroxid, -cyanid, -sulfat, -nitrat, -phosphid, -borid, -chromoxid, -cobaltoxid, -carbonathydroxid, -cyclohexanbutyrat, -hydroxid, -molybdat, -octanoat, -oxalat, -perchlorat, -phthalocyanin, -5,9,14,18,23,27,32,36-octabutoxy-2,3-naphthalocyanin, -sulfamat, -perchlorat, -thiocyanat, -bis(2,2,6,6-tetramethyl-3,5-heptanedionat), -propionat, -acetat, -stearat, -2-ethylhexanoat, -acetylacetonat, -hexafluoroacetyl-acetonat, -tetrafluoroborat, -thiosulfat, -trifluoroacetat, -phthalocyanintetrasulfonsäure Tetranatriumsalz, -methyl, -cyclopentadienyl, -methylcyclopentadienyl, -ethylcyclopentadienyl, -pentamethylcyclopentadienyl, -2,3,7,8,12,13,17,18-octaethyl-21H,23H-porphin, -5,10,15,20-tetraphenyl-21H,23H-porphin, -bis(5-[[4-(dimethylamino)phenyl]imino]-8(5H)-quinolinon), -2,11,20,29-tetra-tert-butyl-2,3-naphthalocyanin, -2,9,16,23-tetraphenoxy-29H,31H-phthalocyanin, -5,10,15,20-tetrakis(pentafluorophenyl)-21H,23H-porphin und deren 1,4-Bis(diphenylphos-phin)butan-, 1,3-Bis(diphenylphosphino)propan-, 2-(2'-Di-tert-butylphosphin)biphenyl-, Acetonitril-, Benzonitril-, Ethylendiamin-, Chloroform-, 1,2-Bis(phenylsulfinyl)ethan-, 1,3-Bis(2,6-diisopropylphenyl)imidazoliden)(3-chloropyridyl)-, 2'-(Dimethylamino)-2-biphenylyl-, Dinorbornylphosphin-, 2-(Dimethylamino-methyl)ferrocen-, Allyl-, Bis(Diphenylphosphino)butan-, (N-succinimidyl)bis-(triphenylphosphin)-, Dimethyl-phenylphosphin-, Methyldiphenylphosphin-, 1,10-Phenanthrolin-, 1,5-Cyclooctadien-, N,N,N',N'-Tetramethylethylendiamin-, Triphenyl-phosphin-, Tri-o-tolylphosphin-, Tricyclohexylphosphin-, Tributylphosphin-, Triethylphosphin-, 2,2'-Bis(diphenylphos-phino)-1,1'-binaphthyl-, 1,3-Bis(2,6-diisopropylphenyl)imidazol-2-yliden-, 1,3-Bis(mesityl)imidazol-2-yliden-, 1,1'-Bis(di-phenylphosphino)ferrocen-, 1,2-Bis(diphenylphosphino)ethan-, N-Methylimidazol-, 2,2'-Bipyridin-, (Bicyclo[2.2.1]-hepta-2,5-dien)-, Bis(di-tert-butyl(4-dimethylaminophenyl)phosphin)-, Bis(tert.-butylisocyanid)-, 2-Methoxyethylether-, Ethylenglycoldimethylether-, 1,2-Dimethoxy-ethan-, Bis(1,3-diamino-2-propanol)-, Bis(N,N-diethylethylendiamin)-, 1,2-Diamino-cyclohexan-, Pyridin-, 2,2':6',2"-terpyridin-, Diethylsulfid-, Ethylen-,Amin-Komplexe; Kalium-, Natrium-, Ammoniumhexachloropalladat(IV), Kalium-, Natrium-, Ammoniumtetrachloropalladat(II), Bromo(tri-tert-butylphosphin)palladium(I) Dimer, (2-Methyl-allyl)palladium(II)chlorid Dimer, Bis(dibenzylidenaceton)palladium(0), Tris(di-benzylidenaceton)dipalladium(0), Tetrakis(triphenylphosphin)palladium(0), Tetrakis-(tricyclohexylphosphin)palladium (0), Bis[1,2-bis(diphenylphosphin)ethan]-palladium(0), Bis(3,5,3',5'-dimethoxydibenzylidenaceton)palladium(0), Bis(tri-tert-butylphos-phin)palladium(0), meso-Tetraphenyltetrabenzoporphin Palladium, Tetrakis(methyl-diphenylphosphin)palladium(0), Tris(3,3',3"-phophinidyn-tris(benzol-sulfonato)palladium(0) Nonanatriumsalz, 1,3-Bis(2,4,6-trimethylphenyl)-imidazol-2-yliden(1,4-naphthoquinon)palladium(0), 1,3-Bis(2,6-diisopropylphenyl)-imidazol-2-yliden(1,4-naphthoquinon)palladium(0), und deren Chloroform-Komplex; Allylnickel(II)chlorid Dimer, Ammoniumnickel(II)sulfat, Bis(1,5-cyclooctadien)nickel(0), Bis(triphenylphosphin)dicarbonylnickel(0), Tetrakis(triphenylphosphin)nickel(0), Tetrakis(triphenylphosphit)nickel(0), Kaliumhexafluoronickelat(IV), Kaliumtetra-cyanonickelat(II), Kaliumnickel(IV)paraperiodat, Dilithiumtetrabromonickelat(II), Kaliumtetracyanonickelat(II); Platin(IV)chlorid, -oxid, -sulfid, Kalium-, Natrium-, Ammoniumhexachloroplatinat(IV), Kalium-, Ammoniumtetrachloroplatinat(II), Kaliumtetracyanoplatinat(II), Trimethyl(methylcyclopentadienyl)platin(IV), cis-Diammintetrachloroplatin(IV), Kaliumtrichloro(ethylen)platinat(II), Natriumhexahydroxyplatinat(IV), Tetraaminplatin(II)tetrachloroplatinat(II), Tetrabutylammoniumhexachloroplatinat(IV), Ethylenbis(triphenylphosphin)platin(0), Platin(0)-1,3-divinyl-1,1,3,3-tetramethyldisiloxan, Platin(0)-2,4,6,8-tetramethyl-2,4,6,8-tetravinylcyclotetrasiloxan, Tetrakis(triphenylphosphin)platin(0), Platinoctaethylporphyrin, Chloroplatinsäure, Carboplatin; Chlorobis(ethylen)rhodium Dimer, Hexarhodiumhexadecacarbonyl, Chloro(1,5-cyclooctadien)rhodium Dimer, Chloro(norbomadien)-rhodium Dimer, Chloro(1,5-hexadien)rhodium Dimer.

Bevorzugt handelt es sich bei den Liganden um Phosphine der Formel (V)

PR⁶₃ (V)

in der die Reste R⁶ unabhängig voneinander für Wasserstoff, geradkettiges, verzweigtes oder cyclisches C₁-C₂₀-Alkyl, C₆-C₂₀-Alkylaryl, C₂-C₂₀-Alkenyl, C₂-C₂₀-Alkinyl, C₁-C₂₀-Carboxyat, C₁-C₂₀-Alkoxy, C₂-C₂₀-Alkenyloxy, C₂-C₂₀-Alkinyloxy, C₂-C₂₀-Alkoxy-carbonyl, C₁-C₂₀-Alkylthio, C₁-C₂₀-Alkylsulfonyl, C₁-C₂₀-Alkylsulfinyl, Silyl und/oder deren Derivative und/oder durch wenigstens ein R⁷ substituiertes Phenyl- oder durch wenigstens ein R⁷ substituiertes Naphtyl stehen. R⁷ steht unabhängig voneinander für Wasserstoff, Fluor, Chlor, Brom, Iod, NH₂, Nitro, Hydroxy, Cyano, Formyl, geradkettiges, verzweigtes oder cyclisches C₁-C₂₀-Alkyl, C₁-C₂₀-Alkoxy, HN(C₁-C₂₀-Alkyl), N(C₁-C₂₀-Alkyl)₂, -CO₂-(C₁-C₂₀-Alkyl), -CON(C₁-C₂₀-Alkyl)₂, -OCO(C₁-C₂₀-Alkyl), NHCO(C₁-C₂₀-Alkyl), C₁-C₂₀-Acyl, -SO₃M, -SO₂N(R⁸)M, -CO₂M, -PO₃M₂, -AsO₃M₂, -SiO₂M, -C(CF₃)₂OM (M = H, Li, Na oder K), wobei R⁸ Wasserstoff, Fluor, Chlor, Brom, Iod, geradkettiges, verzweigtes oder cyclisches C₁-C₂₀-Alkyl, C₂-C₂₀-Alkenyl, C₂-C₂₀-Alkinyl, C₁-C₂₀-Carboxyat, C₁-C₂₀-Alkoxy, C₂-C₂₀-Alkenyloxy, C₂-C₂₀-Alkinyloxy, C₂-C₂₀-Alkoxycarbonyl, C₁-C₂₀-Alkylthio, C₁-C₂₀-Alkylsulfonyl, C₁-C₂₀-Alkylsulfinyl, Silyl und/oder deren Derivative, Aryl, C₆-C₂₀-Arylalkyl, C₆-C₂₀-Alkylaryl, Phenyl und/oder Biphenyl bedeutet. Vorzugsweise sind alle Gruppen R⁶ identisch.

Geeignete Phosphine (V) sind beispielsweise Trimethyl-, Triethyl-, Tripropyl-, Triisopropyl-, Tributyl-, Triisobutyl-, Triisopentyl-, Trihexyl-, Tricyclohexyl-, Trioctyl-, Tridecyl-, Triphenyl-, Diphenylmethyl-, Phenyldimethyl-, Tri(o-tolyl)-, Tri(p-tolyl)-, Ethyldiphenyl-, Dicyclohexylphenyl-, 2-Pyridyldiphenyl-, Bis(6-methyl-2pyridyl)-phenyl-, Tri-(p-chlorophenyl)-, Tri-(p-methoxyphenyl)-, Diphenyl(2-sulfonatophenyl)phosphin; Kalium-, Natrium- und Ammoniumsalze von Diphenyl(3-sulfonatophenyl)phosphin, Bis(4,6-dimethyl-3-sulfonatophenyl)(2,4-dimethylphenyl)phosphin, Bis(3-sulfonato-phenyl)phenylphosphinen, Tris(4,6-dimethyl-3-sulfonatophenyl)phosphinen, Tris(2-sulfonatophenyl)phosphinen, Tris(3-sulfonatophenyl)phosphinen; 2-Bis(diphenylphos-phinoethyl)trimethylammoniumiodid, 2'-Dicyclohexylphosphino-2,6-dimethoxy-3-sulfonato-1,1'-biphenyl Natriumsalz, Trimethylphosphit und/oder Triphenylphosphit.

Besonders bevorzugt handelt es sich bei den Liganden um bidentate Liganden der allgemeinen Formel

R⁶₂M"-Z-M"R⁶₂ (VI).

In dieser Formel repräsentieren M" unabhängig voneinander N, P, As oder Sb. Bevorzugt sind die beiden M" gleich und besonders bevorzugt steht M" für ein Phosphoratom.

Jede Gruppe R⁶ repräsentiert unabhängig voneinander die unter Formel (V) beschrieben Reste. Vorzugsweise sind alle Gruppen R⁶ identisch.

Z stellt bevorzugt eine bivalente Überbrückungsgruppe dar, die wenigstens 1 Brückenatom enthält, wobei bevorzugt 2 bis 6 Brückenatome enthalten sind.

Brückenatome können ausgewählt werden aus C-, N-, O-, Si- und S-Atomen. Bevorzugt ist Z eine organische Überbrückungsgruppe, die wenigstens ein Kohlenstoffatom enthält. Bevorzugt ist Z eine organische Überbrückungsgruppe, die 1 bis 6 Brückenatome enthält, wovon wenigstens zwei Kohlenstoffatome sind, und die unsubstituiert oder substituiert sein können.

Bevorzugte Gruppen Z sind -CH₂-, -CH₂-CH₂-, -CH₂-CH₂-CH₂-, -CH₂-CH(CH₃)-CH₂-, -CH₂-C(CH₃)₂-CH₂-, -CH₂-C(C₂H₅)-CH₂-, -CH₂-Si(CH₃)₂-CH₂-, -CH₂-O-CH₂-, -CH₂-CH₂-CH₂-CH₂-, -CH₂-CH(C₂H₅)-CH₂-, -CH₂-CH(n-Pr)-CH und -CH₂-CH(n-Bu)-CH₂-, unsubstituierte oder substituierte 1,2-Phenyl-, 1,2-Cyclohexyl-, 1,1'- oder 1,2-Ferrocenyl-Reste, 2,2'-(1,1'-Biphenyl)-, 4,5-Xanthen- und/oder Oxydi-2,1-phenylen-Reste.

Geeignete bidentate Phosphinliganden (VI) sind beispielsweise 1,2-Bis(dimethyl-), 1,2-Bis(diethyl-), 1,2-Bis(dipropyl-), 1,2-Bis(diisopropyl-), 1,2-Bis(dibutyl-), 1,2-Bis(di-tert.-butyl-), 1,2-Bis(dicyclohexyl-) und 1,2-Bis(diphenylphosphino)ethan; 1,3-Bis(dicyclohexyl-), 1,3-Bis(diisopropyl-), 1,3-Bis(di-tert.-butyl-) und 1,3-Bis(diphenyl-phosphino)propan; 1,4-Bis-(diisopropyl-) und 1,4-Bis(diphenylphosphino)butan; 1,5-Bis(dicyclohexylphosphino)pentan; 1,2-Bis(di-tert.-butyl-), 1,2-Bis(di-phenyl-), 1,2-Bis(di-cyclohexyl-), 1,2-Bis(dicyclo-pentyl-), 1,3-Bis(di-tert.-butyl-), 1,3-Bis(diphenyl-), 1,3 Bis(di-cyclohexyl-) und 1,3-Bis(dicyclopentylphosphino)benzol; 9,9-Dimethyl-4,5-bis(diphenylphosphino)xanthen, 9,9-Dimethyl-4,5-bis(diphenylphosphino)-2,7-di-tert.-butylxanthen, 9,9-Dimethyl-4,5-bis(di-tert.-butylphosphino)xanthen, 1,1'-Bis(diphenyl-phosphino)-ferrocen, 2,2'-Bis(diphenylphosphino)-1,1'-binaphthyl, 2,2'-Bis(di-p-tolylphosphino)-1,1'-binaphthyl, (Oxydi-2,1-phenylen)bis(diphenylphosphin), 2,5-(Di-isopropylphospholano)benzol, 2,3-O-Isopropropyliden-2,3-dihydroxy-1,4-bis(diphenyl-phosphino)butan, 2,2'-Bis(di-tert.-butylphosphino)-1,1'-biphenyl, 2,2'-Bis(dicyclohexyl-phosphino)-1,1'-biphenyl, 2,2'-Bis(diphenylphosphino)-1,1'-biphenyl, 2-(Di-tert.-butylphosphino)-2'-(N,N-dimethylamino)biphenyl, 2-(Dicyclohexylphosphino)-2'-(N,N-dimethylamino)biphenyl, 2-(Diphenylphosphino)-2'-(N,N-dimethylamino)biphenyl, 2-(Diphenylphosphino)ethylamin, 2-[2-(Diphenylphosphino)ethyl]pyridin; Kalium-, Natrium- und Ammoniumsalze von 1,2-Bis(di-4-sulfonatophenylphosphino)-benzol, (2,2'-Bis [[bis(3-sulfonato-phenyl)phosphino]methyl]-4,4',7,7'-tetrasulfonato-1,1'-binapthyl, (2,2'-Bis[[bis(3-sulfonatophenyl)phosphino]methyl]-5,5'-tetrasulfonato-1,1'-biphenyl, (2,2'-Bis [[bis(3-sulfonatophenyl)phosphino]methyl]-1,1'-binapthyl, (2,2'-Bis[[bis(3-sulfonatophenyl)phosphino]-methyl]-1,1'-biphenyl, 9,9-Dimethyl-4,5-bis(diphenylphosphino)-2,7-sulfonatoxanthen, 9,9-Dimethyl-4,5-bis(di-tert.-butylphos-phino)-2,7-sulfonatoxanthen, 1,2-Bis(di-4-sulfonatophenylphosphino)-benzol, Meso-tetrakis(4-sulfonatophenyl)porphin, Meso-tetrakis(2,6-dichloro-3-sulfonato-phenyl)porphin, Meso-tetrakis(3-sulfonatomesityl)porphin, Tetrakis(4-carboxy-phenyl)porphin und 5,11,17,23-Sulfonato-25,26,27,28-tetrahydroxycalix[4]aren.

Zudem können die Liganden der Formel (V) und (VI) durch die Reste R⁶ und/oder die Überbrückungsgruppe an ein geeignetes Polymer oder anorganisches Substrat gebunden sein.

Bevorzugt hat das Katalysatorsystem ein Übergangsmetall-Ligand-Molverhältnis von 1:0,01 bis 1:100, besonders bevorzugt von 1:0,05 bis 1:10 und insbesondere von 1:1 bis 1:4.

Bevorzugt erfolgen die Umsetzungen in den Verfahrensstufen a), b) und c) wahlweise in einer Atmosphäre, die weitere gasförmige Bestandteile wie zum Beispiel Stickstoff, Sauerstoff, Argon, Kohlendioxid enthält; die Temperatur beträgt -20 bis 340 °C, insbesondere 20 bis 180 °C und der Gesamtdruck von 1 bis 100 bar.

Die Isolierung der Produkte und/oder des Übergangsmetalls und/oder der Übergangsmetallverbindung und/oder Katalysatorsystems und/oder des Liganden und/oder der Edukte nach den Verfahrensstufen a), b) und c) erfolgt wahlweise durch Destillation oder Rektifikation, durch Kristallisation oder Fällen, durch Filtration oder Zentrifugieren, durch Adsorption oder Chromatographie oder anderen bekannten Methoden.

Erfindungsgemäß werden Lösungsmittel, Hilfsmittel und ggf. andere flüchtige Bestandteile durch z. B. Destillation, Filtration und/oder Extraktion abgetrennt.

Bevorzugt erfolgt die Umsetzungen in den Verfahrensstufen a), b) und c) wahlweise in Absorptionskolonnen, Sprühtürmen, Blasensäulen, Rührkesseln, Rieselbettreaktoren, Strömumgsrohren, Schlaufenreaktoren und/oder Knetern.

Geeignete Mischorgane sind z. B. Anker-, Blatt-, MIG-, Propeller-, Impeller-, Turbinen-, Kreuz-Rührer, Dispergierscheiben, Hohl-(Begasungs-)-Rührer, Rotor-Stator-Mischer, statische Mischer, Venturi-Düsen und/oder Mammutpumpen.

Bevorzugt erfahren die Reaktionslösungen/-mischungen dabei eine Mischintensität, die einer Rotations-Reynolds-Zahl von 1 bis 1.000.000, bevorzugt von 100 bis 100.000 entspricht.

Bevorzugt erfolgt eine intensive Durchmischung der jeweiligen Reaktionspartner etc. unter einem Energieeintrag von 0,080 bis 10 kW/m³, bevorzugt 0,30 - 1,65 kW/m³.

Bevorzugt wirkt der jeweilige Katalysator A oder B während der Umsetzung homogen und/oder heterogen. Daher wirkt der jeweils heterogen wirkende Katalysator während der Umsetzung als Suspension oder an eine feste Phase gebunden.

Bevorzugt wird der jeweilige Katalysator A oder B vor der Umsetzung und/oder zu Beginn der Umsetzung und/oder während der Umsetzung in situ generiert.

Bevorzugt erfolgt die jeweilige Umsetzung in einem Lösungsmittel als Ein-Phasen-System in homogener oder heterogener Mischung und/oder in der Gasphase.

Wird ein Mehr-Phasen-System verwendet kann zusätzlich ein Phasentransferkatalysor eingesetzt werden.

Die erfindungsgemäßen Reaktionen können in flüssiger Phase, in der Gasphase oder auch in überkritischer Phase durchgeführt werden. Dabei wird der jeweilige Katalysator A oder B bei Flüssigkeiten vorzugsweise homogen oder als Suspension eingesetzt, während bei Gasphasen- oder überkritischer Fahrweise eine Festbettanordnung von Vorteil ist.

Geeignete Lösungsmittel sind Wasser, Alkohole, wie z. B. Methanol, Ethanol, i-Propanol, n-Propanol, n-Butanol, i-Butanol, t-Butanol, n-Amylalkohol, i-Amylalkohol, t-Amylalkohol, n-Hexanol, n-Octanol, i-Octanol, n-Tridecanol, Benzylalkohol etc. Bevorzugt sind weiterhin Glycole wie z. B. Ethylenglycol, 1,2-Propandiol, 1,3-Propandiol, 1,3-Butandiol, 1,4-Butandiol, Diethylenglycol etc.; aliphatische Kohlenwasserstoffe wie Pentan, Hexan, Heptan, Octan, und Petrolether, Petroleumbenzin, Kerosin, Petroleum, Paraffinöl etc.; aromatische Kohlenwasserstoffe wie Benzol, Toluol, Xylol, Mesitylen, Ethylbenzol, Diethylbenzol etc.; Halogenkohlenwasserstoffe wie Methylenchlorid, Chloroform, 1,2-Dichloroethan, Chlorobenzol, Tetrachlorkohlenstoff, Tetrabromoethylen etc.; alicyclische Kohlenwasserstoffe wie Cyclopentan, Cyclohexan, und Methylcyclohexan etc.; Ether wie Anisol (Methylphenylether), t-Butylmethylether, Dibenzylether, Diethylether, Dioxan, Diphenylether, Methylvinylether, Tetrahydrofuran, Triisopropyl-ether etc.; Glycolether wie Diethylenglycoldiethylether, Diethylenglycoldimethylether (Diglyme), Diethylenglycolmonobutylether, Diethylenglycolmonomethylether, 1,2-Dimethoxyethan (DME Monoglyme), Ethylenglycolmonobutylether, Triethylenglycoldimethylether (Triglyme), Triethylenglycol-monomethylether etc.; Ketone wie Aceton, Diisobutylketon, Methyl-n-propylketon; Methylethylketon, Methyl-i-butylketon etc; Ester wie Methylformat, Methylacetat, Ethylacetat, n-Propylacetat und n-Butylacetat etc.; Carbonsäuren wie Ameisensäure, Essigsäure, Propionsäure, Buttersäure etc.; einzeln oder in Kombination miteinander.

Geeignete Lösungsmittel sind auch die eingesetzten Olefine und Phosphinsäurequellen. Diese bieten Vorteile in Form einer höheren Raum-Zeit-Ausbeute.

Bevorzugt wird die Umsetzung unter dem eigenen Dampfdruck des Olefins und/oder des Lösungsmittels durchgeführt.

Bevorzugt sind R¹, R², R³, R⁴ des Olefins (IV) gleich oder verschieden und bedeuten, unabhängig voneinander, H, Methyl, Ethyl, n-Propyl, Isopropyl, n-Butyl, Isobutyl, tert.-Butyl und/oder Phenyl.

Bevorzugt werden auch funktionalisierte Olefine wie Allylisothiocyanat, Allylmethacrylat, 2-Allylphenol, N-Allylthioharnstoff, 2-(Allylthio)-2-thiazolin, Allyltrimethylsillan, Allylacetat, Allylacetoacetat, Allylalkohol, Allylamin, Allylbenzol, Allylcyanid, Allyl-(cyanacetat), Allylanisol, trans-2-Pentenal, cis-2-Pentennitril, 1-Penten-3-ol, 4-Penten-1-ol, 4-Penten-2-ol, trans-2-Hexenal, trans-2-Hexen-1-ol, cis-3-Hexen-1-ol, 5-Hexen-1-ol, Styrol, -Methylstyrol, 4-Methylstyrol, Vinylacetat, 9-Vinylanthracen, 2-Vinylpyridin, 4-Vinylpyridin oder 1-Vinyl-2-pyrrolidon eingesetzt.

Bevorzugt erfolgt die Umsetzung bei einem Partialdruck des Olefins von 0,01 - 100 bar, besonders bevorzugt bei einem Partialdruck des Olefins von 0,1 - -10 bar.

Bevorzugt erfolgt die Umsetzung in einem Phosphinsäure-Olefin-Molverhältnis von 1:10.000 bis 1:0,001, besonders bevorzugt im Verhältnis von 1:30 bis 1:0,01.

Bevorzugt erfolgt die Umsetzung in einem Phosphinsäure-Katalysator-Molverhältnis von 1:1 bis 1:0,00000001, besonders bevorzugt bei 1:0,01 bis 1:0,000001.

Bevorzugt erfolgt die Umsetzung in einem Phosphinsäure-Lösungsmittel-Molverhältnis von 1:10.000 bis 1:0, besonders bevorzugt bei 1:50 bis 1:1.

Ein erfindungsgemäßes Verfahren zur Herstellung von Verbindungen der Formel (II) ist dadurch gekennzeichnet, dass man eine Phosphinsäurequelle mit Olefinen in Gegenwart eines Katalysators umsetzt und das Produkt (II) (Alkylphosphonigsäure bzw. -salze, -ester) von Katalysator, Übergangsmetall bzw. Übergangsmetallverbindung, Ligand, Komplexbildner, Salzen und Nebenprodukten befreit wird.

Erfindungsgemäß wird der Katalysator, das Katalysatorsystem, das Übergangsmetall und/oder die Übergangsmetallverbindung abgetrennt durch Zugabe eines Hilfsmittels 1 und Entfernen des Katalysators, des Katalysatorsystems, des Übergangsmetalls und/oder der Übergangsmetallverbindung durch Extraktion und/oder Filtration.

Erfindungsgemäß wird der Ligand und/oder Komplexbildner durch Extraktion mit Hilfsmittel 2 und/oder Destillation mit Hilfsmittel 2 abgetrennt.

Hilfsmittel 1 ist bevorzugt Wasser und/oder mindestens ein Vertreter der Familie der Metallfänger (Metal Scavenger). Bevorzugte Metallfänger sind Metalloxide wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur, Metallcarbonate wie etwa Bariumcarbonat, Calciumcarbonat, Strontiumcarbonat, Metallsulfate wie etwa, Bariumsulfat, Calciumsulfat, Strontiumsulfat, Metallphosphate wie etwa Aluminiumphosphat, Vanadiumphosphat, Metallcarbide wie etwa Siliconcarbid, Metallaluminate wie etwa Calciumaluminat, Metallsilikate wie etwa Aluminiumsilikat, Kreiden, Zeolithe, Bentonit, Montmorillonit, Hectorit, funktionalisierte Silikate, funktionalisierte Silikagele wie etwa SiliaBond^{®}, QuadraSil™, funktionalisierte Polysiloxane wie etwa Deloxan^{®}, Metallnitride, Kohle, Aktivkohle, Mullite, Bauxite, Antimonite, Scheelite, Perovskite, Hydrotalcite, funktionalisierte und unfunktionalisierte Cellulose, Chitosan, Keratin, Heteropolyanionen, lonentauscher wie etwa Amberlite™, Amberjet™, Ambersep™, Dowex^{®}, Lewatit^{®}, ScavNet^{®}, funktionalisierte Polymere wie etwa Chelex^{®}, QuadraPure™, Smopex^{®}, PolyOrgs^{®}, polymergebundene Phosphane, Phosphanoxide, Phosphinate, Phosphonate, Phosphate, Amine, Ammoniumsalze, Amide, Thioamide, Harnstoffe, Thioharnstoffe, Triazine, Imidazole, Pyrazole, Pyridine, Pyrimidine, Pyrazine, Thiole, Thiolether, Thiolester, Alkohole, Alkoxide, Ether, Ester, Carbonsäuren, Acetate, Acetale, Peptide, Hetarene, Polyethylenimin/Siliciumdioxid und/oder Dendrimere.

Bevorzugt wird Hilfsmittel 1 in Mengen zugesetzt, die einer 0,1 - 40 gew.-%igen Beladung des Metalls auf dem Hilfsmittel 1 entsprechen.

Bevorzugt wird Hilfsmittel 1 bei Temperaturen von 20 - 90 °C eingesetzt.

Bevorzugt beträgt die Verweilzeit von Hilfsmittel 1 0,5 - 360 Minuten.

Hilfsmittel 2 sind bevorzugt die vorgenannten, erfindungsgemäßen Lösungsmittel, wie sie bevorzugt in der Verfahrensstufe a) eingesetzt werden.

Die Veresterung der Alkylphosphonsäure (III) bzw. der Alkylphosphonigsäuredrivate (II) sowie der Phosphinsäurequelle (I) zu den entsprechenden Estern kann beispielsweise durch Umsetzung mit höhersiedenden Alkoholen unter Entfernung des gebildeten Wassers durch Azeotropdestillation oder durch Umsetzung mit Epoxiden (Alkylenoxiden) erreicht werden.

Bevorzugt wird hierbei nach Schritt a) die Alkylphosphonigsäure (II) mit einem Alkohol der allgemeinen Formel M-OH und/oder M'-OH oder durch Umsetzung mit Alkylenoxiden, wie nachfolgend angeführt, direkt verestert.

Bevorzugt sind M-OH primäre, sekundäre oder tertiäre Alkohole mit einer Kohlenstoffkettenlänge von C₁-C₁₈. Besonders bevorzugt sind Methanol, Ethanol, Propanol, Isopropanol, n-Butanol, 2-Butanol, tert.-Butanol, Amylalkohol und/oder Hexanol.

Bevorzugt sind M'-OH Ethylenglykol, 1,2-Propylen-glykol, 1,3-Propylenglykol, 1,4-Butandiol, 2,2-Dimethylpropan-1,3-diol, Neopentylglykol, 1,6-Hexandiol, 1,4-Cyclohexandimethanol, Glycerin, Trishydroxymethylethan, Trishydroxymethylpropan, Pentaerythrit, Sorbit, Mannit, α-Naphthol, Polyethylenglykole, Polypropylenglykole und/oder EO-PO-Blockpolymere.

Geeignet sind als M-OH und M'-OH auch ein- oder mehrwertige, ungesättigte Alkohole mit einer Kohlenstoffkettenlänge von C₁₋₁₈, etwa n-Buten-2-ol-1, 1,4-Butendiol und Allylalkohol.

Geeignet sind als M-OH und M'-OH auch Umsetzungsprodukte von einwertigen Alkoholen mit einem oder mehreren Molekülen von Alkylenoxiden, besonders bevorzugt sind Ethylenoxid und 1,2-Propylenoxid. Bevorzugt sind 2-Methoxyethanol, 2-Ethoxy-ethanol, 2-n-Butoxyethanol, 2-(2'-Ethylhexyloxy)-ethanol, 2-n-Dodecoxyethanol, Methyldiglykol, Ethyldiglykol, Isopropyldiglykol, Fettalkoholpolyglykolether und Arylpolyglykolether.

Bevorzugt sind M-OH und M'-OH auch Umsetzungsprodukte von mehrwertigen Alkoholen mit einem oder mehreren Molekülen Alkylenoxid, insbesondere Diglykol und Triglykol sowie Addukte von 1 bis 6 Molekülen Ethylenoxid oder Propylenoxid an Glycerin, Trishydroxymethylpropan oder Pentaerythrit.

Als M-OH und M'-OH können auch Umsetzungsprodukte von Wasser mit einem oder mehreren Molekülen Alkylenoxid eingesetzt werden. Bevorzugt sind Polyethylenglykole und Poly-1,2-propylenglykole verschiedener Molekulargrößen mit einem mittleren Molgewicht von 100-1.000 g/mol, besonders bevorzugt von 150-350 g/mol.

Bevorzugt sind als M-OH und M'-OH auch Umsetzungsprodukte von Ethylenoxid mit Poly-1,2-propylenglykolen oder Fettalkoholpropylenglykole; ebenso Umsetzungsprodukte von 1,2-Propylenoxid mit Polyethylenglykolen oder Fettalkoholethoxylaten. Bevorzugt sind solche Umsetzungsprodukte mit einem mittleren Molgewicht von 100-1000 g/mol, besonders bevorzugt von 150-450 g/mol.

Einsetzbar sind als M-OH und M'-OH auch Umsetzungsprodukte von Alkylenoxiden mit Ammoniak, primären oder sekundären Aminen, Schwefelwasserstoff, Merkaptanen, Sauerstoffsäuren des Phosphors und C₂-C₆-Dicarbonsäuren. Geeignete Umsetzungs-produkte von Ethylenoxid mit Stickstoffverbindungen sind Triethanolamin, Methyldi-ethanolamin, n-Butyldiethanolamin, n-Dodecyldiethanolamin, Dimethylethanolamin, n-Butylmethylethanolamin, Di-n-butylethanolamin, n-Dodecylmethylethanolamin, Tetrahydroxyethylethylendiamin oder Pentahydroxyethyldiethylentriamin.

Bevorzugte Alkylenoxide sind Ethylenoxid, 1,2-Propylenoxid, 1,2-Epoxybutan, 1,2-Epoxyethylbenzol, (2,3-Epoxypropyl)benzol, 2,3-Epoxy-1-propanol und 3,4-Epoxy-1-buten.

Geeignete Lösungsmittel sind die in Verfahrensschritt a) genannten Lösungsmittel und auch die eingesetzten Alkohole M-OH und M'-OH und Alkylenoxide. Diese bieten Vorteile in Form einer höheren Raum-Zeit-Ausbeute.

Bevorzugt wird die Umsetzung unter dem eigenen Dampfdruck des eingesetzten Alkohols M-OH und M'-OH und Alkylenoxids und/oder des Lösungsmittels durchgeführt.

Bevorzugt erfolgt die Umsetzung bei einem Partialdruck des eingesetzten Alkohols M-OH und M'-OH und Alkylenoxids von 0,01 - 100 bar, besonders bevorzugt bei einem Partialdruck des Olefins von 0,1 - 10 bar.

Bevorzugt wird die Umsetzung bei einer Temperatur von -20 bis 340 °C durchgeführt, besonders bevorzugt bei einer Temperatur von 20 bis 180 °C.

Bevorzugt erfolgt die Umsetzung bei einem Gesamtdruck von 1 bis 100 bar.

Bevorzugt erfolgt die Umsetzung in einem Molverhältnis der Alkohol- bzw. Alkylenoxidkomponente zu der Phosphinsäurequelle (I) bzw. Alkylphosphonigsäure (II) bzw. Alkylphosphonsäure (III) von 10.000:1 bis 0,001:1, besonders bevorzugt im Verhältnis von 1.000:1 bis 0,01:1.

Bevorzugt erfolgt die Umsetzung in einem Molverhältnis der Phosphinsäurequelle (I) bzw. Alkylphosphonigsäure (II) bzw. Alkylphosphonsäure (III) zum Lösungsmittel von 1:10.000 bis 1:0, besonders bevorzugt in einem Phosphinsäure-Lösungsmittel-Molverhältnis von 1:50 bis 1:1.

Die im Schritt b) beschriebene Umsetzung zur Alkylphosphonsäure, deren Salze und Ester (III) wird durch selektive Oxidation der Alkylphosphonigsäure, deren Salze und Ester (II) durch ein Oxidationsmittel, ein Oxidationsmittel und Wasser oder durch Sauerstoff und Wasser in Gegenwart eines Katalysators B erreicht.

Bevorzugte Oxidationsmittel und/oder Sauerstoff-Bildner sind Kaliumpermanganat, Braunstein, Chromtrioxid, Kaliumdichromat, Pyridindichromat, Pyridinchlorchromat, Collins-Reagenz, Jones-Reagenz, Corey-Gilman-Ganem-Reagenz, (Dess-Martin-)Periodinan, o-Iodoxy-benzoesäure, Rutheniumtetroxid, Rutheniumdioxid, Tetra-n-propyl-perruthenat, Rutheniumtrichlorid/Natriumperiodat, Rutheniumdioxid/Natrium-periodat, Chlor, Hypochlorit, Persäuren, wie z. B. Wasserstoffperoxid, Perameisensäure und Peressigsäure, Nitroxylradikale, wie z. B. 2,2,6,6-Tetramethylpiperidin-N-oxid (TEMPO).

Zusätzlich zu den o. g. Oxidationsmittel und/oder Sauerstoff-Bildnern sind auch Peroxo-Verbindungen wie Peroxomonoschwefelsäure, Kaliummonopersulfat (Kaliumperoxo-monosulfat), Caroat™, Oxone™, Peroxodischwefelsäure, Kaliumpersulfat (Kaliumperoxodisulfat), Natriumpersulfat (Natriumperoxodisulfat), Ammoniumpersulfat (Ammoniumperoxodisulfat) geeignet.

Besonders bevorzugte Oxidationsmittel und/oder Sauerstoff-Bildner sind Verbindungen, die im Lösemittelsystem Peroxide bilden können wie Natriumperoxid, -hydrate, Natriumperoxiddiperoxohydrat, -hydrate, Lithiumperoxid, -hydrate, Calciumperoxid, Strontiumperoxid, Bariumperoxid, Magnesiumperoxid, Zinkperoxid, Kaliumhyperoxid, -hydrate, Natriumperoxoborat, -hydrate, Kaliumperoxoboratperoxohydrat, Magnesium-peroxoborat, Calciumperoxoborat, Bariumperoxoborat, Strontiumperoxoborat, Kaliumperoxoborat, Peroxomonophosphorsäure, Peroxodiphosphorsäure, Kaliumperoxodiphosphat, Ammoniumperoxodiphosphat, Kaliumammoniumperoxo-diphosphate, Natriumcarbonatperoxohydrat, Harnstoffperoxohydrat, Ammonium-oxalatperoxid, Bariumperoxidperoxohydrat, Bariumperoxidperoxohydrat, Calciumhydrogenperoxide, Calciumperoxidperoxohydrat, Ammoniumtriphosphatdiperoxophos-phathydrat, Kaliumfluoridperoxohydrat, Kaliumfluoridtriperoxohydrat, Kaliumfluoriddiper-oxohydrat, Natriumpyrophosphatdiperoxohydrat, Natriumpyrophosphatdiperoxohydratoctahydrat, Kaliumacetatperoxohydrat, Natriumphosphatperoxohydrat, Natriumsilicatperoxohydrat.

Bevorzugte Oxidationsmittel und/oder Sauerstoff-Bildner sind Wasserstoffperoxid, Perameisensäure, Peressigsäure, Benzoylperoxid, Di-t-butylperoxid, Dicumylperoxid, 2,4-Di-chlorobenzoylper-oxid, Decanoylperoxid, Laurylperoxid, Cumolhydroperoxid, Pinenhydroperoxid, p-Menthanhydroperoxid, t-Butylhydroperoxid, Acetylacetonperoxid, Methylethylketonperoxid, Bernsteinsäureperoxid, Dicetylperoxydicarbonat, t-Butylper-oxyacetat, t-Butylperoxymaleinsäure, t-Butylperoxybenzoat, Acetylcyclohexylsulfonylperoxid.

Bevorzugt erfolgt die Umsetzung in einem Dialkylphosphinsäure-Oxidationsmittel-Molverhältnis von 1:10 bis 1:0,1, besonders bevorzugt in einem Dialkylphosphinsäure-Oxidationsmittel-Molverhältnis von 1:2 bis 1:0,25.

Der Katalysator B, wie er für den Verfahrensschritt b) für die Umsetzung des Alkylphosphonigsäurederivats (II) mit Sauerstoff und Wasser zum Endprodukt, dem Alkylphosphonsäurederivat (III) eingesetzt wird, kann bevorzugt der Katalysator A sein.

Zusätzlich handelt es sich bevorzugt bei den Übergangsmetallen für den Katalysator C um Elemente der ersten Nebengruppe, wie etwa Gold.

Zusätzlich zu den unter Katalysator A aufgelisteten Quellen von Übergangsmetallen und Übergangsmetallverbindungen können auch die folgenden Übergangsmetalle und Übergangsmetallverbindungen eingesetzt werden:
Gold, colloidales Gold, Ruthenium, Ruthenium auf Aktivkohle, auf Kohle, auf Alumina, Platin-Palladium-Gold-, Gold-Nickel-, Gold-Germanium-, Gold-Platin-, Gold-Palladium-, Gold-Beryllium-, Platin-Ruthenium-, Palladium-Ruthenium-Legierung, Gold(I)- und/oder Gold(III)-, Ruthenium(II)- und/oder Ruthenium(III)-und/oder Ruthenium(IV)chlorid, -bromid, -iodid, -oxid, -cyanid, -kaliumcyanid, -natriumcyanid -sulfid, -sulfat, -hydrid, -nitrosylchlorid, -nitrosylnitrat, -bathophenanthrolindisulfonat Natriumsalz, -thiosulfat, -perchlorat, -cyclopentadienyl, -ethylcyclopentadienyl, -pentamethylcyclopentadienyl, -indenyl, -2-methylallyl, -propionat, -acetat, -acetylacetonat, -hexafluoroacetylacetonat, -tetrafluoroborat, -kaliumthiocyanat, -natriumthiocyanat, -trifluoroacetat, -bis(trifluoro-methansulfonyl)imidat, -hexafluoroantimonat, -2-pyridincarboxylat, und deren 1,4-Bis(diphenylphosphin)-butan-, 1,3-Bis(diphenylphosphino)propan-, 2-(2'-Di-tert-butylphosphin)biphenyl-, Acetonitril-, Benzonitril-, Dinorbornylphosphin-, 1,4-Bis(di-phenylphosphino)butan-, Dimethylphenylphosphin-, Methyldiphenylphosphin-, Triphenylphosphin-, Tri-o-tolylphosphin-, Tricyclohexylphosphin-, Tributylphosphin-, Tri-tert-butylphosphin-, Trimethylphosphin-, Triethylphosphin-, 2,2'-Bis(diphenylphos-phino)-1,1'-Binaphthyl-, 1,3-Bis(mesityl)imidazol-2-yliden-, 1,1'-Bis(diphenyl-phosphino)ferrocen-, (1,1'-Biphenyl-2-yl)di-tert-butylphosphin-, 1,3-Bis(2,6-diiso-propyl-phenyl)imidazol-2-yliden-, 2-Dicyclohexyl(2',4',6'-trisopropylbiphenyl)-phosphin-, Dimethylsulfid-, Tris(2,4-di-tert-butylphenyl)phosphit-, Tris(para-trifluoromethyl-phenyl)phosphin-, Bis(diphenyl-phosphino)methan-, 1,2-Bis(diphenylphosphino)ethan-, N-Methylimidazol-, 1,10-Phenanthrolin-, 4,7-Diphenyl-1,10-phenanthrolin-, 1,5-Cyclo-octadien-, 1,3,5-Cyclooctatrien-, Napthalen-, p-Cymen-, 3-Methyl-2-butenyliden-, Benzyliden-, Pyridin-, 2,3,7,8,12,13,17,18-Octaethyl-21H,23H-porphin-, 5,10,15,20-Tetraphenyl-21H,23H-porphin-, N,N,N',N'-Tetramethylethylendiamin-, Tri-o-tolylphos-phin-, 2,2'-Bis(diphenylphosphino)-1,1'-binaphthyl-, 1,1'-Bis(diphenylphosphino)ferrocen-, 2,2'-Bipyridin-, (Bicyclo[2.2.1]hepta-2,5-dien)-, Bis(di-tert-butyl(4-dimethylamino-phenyl)phosphin)-, 2-(Di-tert-butylphosphino)ethylamin-, (2-(Diphenylphosphino)ethyl-amin-, 1,3-Bis(2,4,6-trimethylphenyl)-2-imidazolidinyliden-, 1,2-Di-aminocyclohexan-, Pyridin-, Carbonyl-, Ethylendiamin-, Amin-Komplex; Kaliumdicyanoaurat(I), Natrium-tetrachloroaurat(III), Kaliumgold(III)chlorid, Natriumaurothiomalat, Tris(triphenylphos-phingold)oxonium tetrafluoroborat, Wasserstofftetrabromoaurat(III); Ammoniumhexachlororuthenat(IV), Kaliumaquapentachlororuthenat(III), (1,5-Cyclo-octadien)-(1,3,5-cyclooctatrien)ruthenium, Trirutheniumdodecacarbonyl, Grubbs Katalysator.

Bevorzugt beträgt der Anteil an Katalysator B bezogen auf die Alkylphosphonigsäure (II) 0,00001 bis 20 Mol-%, besonders bevorzugt 0,0001 bis 10 mol-%.

Bevorzugt erfolgt die Umsetzung in einem Phosphinsäure-Lösungsmittel-Molverhältnis von 1:10.000 bis 1:0, besonders bevorzugt in einem Phosphinsäure-Lösungsmittel-Molverhältnis von 1:50 bis 1:1.

Bevorzugt erfolgt die Oxidation bei Temperaturen von 30 bis 120 °C und besonders bevorzugt bei 50 bis 90 °C.

Bevorzugt beträgt die Reaktionszeit 0,1 bis 20 Stunden.

Bevorzugt erfolgt die Umsetzung bei einem Gesamtdruck von 1 bis 100 bar.

Geeignete Lösungsmittel für Verfahrensstufe b) sind die, wie sie weiter vorne in Verfahrensstufe a) eingesetzt werden.

Bevorzugt erfolgt die Umsetzung bei einem Partialdruck des Sauerstoffs von 0,01 - 100 bar, besonders bevorzugt bei 0,1 - 10 bar

Die Oxidation kann in flüssiger Phase, in der Gasphase oder auch in überkritischer Phase durchgeführt werden. Dabei wird der Katalysator bei Flüssigkeiten vorzugsweise homogen oder als Suspension eingesetzt, während bei Gasphasen- oder überkritischer Fahrweise eine Festbettanordnung von Vorteil ist.

Bevorzugt wird der pH der Reaktionslösung durch Zugabe von Alkali- und/oder Erdalkaliverbindungen in einem Bereich von pH 6 bis 12 gehalten, besonders bevorzugt in einem Bereich von pH 6 bis 9.

Bevorzugte Alkali- und/oder Erdalkalimetalle sind Lithium, Natrium, Kalium, Magnesium, Calcium, Barium.

Bevorzugte Alkali- und/oder Erdalkaliverbindungen sind deren Oxide, Hydroxide, Carbonate und Carboxylate.

Bevorzugte Alkali- und/oder Erdalkalimetallverbindungen sind Lithiumhydroxid, Lithiumhydrid, Natriumhydroxid, Natriumhydrid, Kaliumhydroxid.

Bevorzugt wird der Sauerstoff als reiner Sauerstoff oder alternativ eine Sauerstoff enthaltende Mischung, wie zum Beispiel Luft oder mit Sauerstoff angereicherte Luft verwendet.

Bevorzugt wird der Sauerstoff in From von Sauerstoffbildnern wie zum Beispiel Wasserstoffperoxid verwendet.

Bevorzugt ist das Verhältnis von Sauerstoff zu phosphorhaltiger Verbindung (II) 1:1 bis 1.500:1.

Die Alkylphosphonsäure, deren Ester oder Salz (III) kann im Folgenden zu weiteren Metallsalzen umgesetzt werden.

Bevorzugt handelt es sich bei den eingesetzten Metallverbindungen der Verfahrensstufe c) um Verbindungen der Metalle Mg, Ca, Ba, Al, Sb, Sn, Ge, Ti, Fe, Zr, Zn, Ce, Bi, Sr, Mn, Li, Na, K, besonders bevorzugt Li, Na, K, Mg, Ca, Al, Ti, Zn, Fe.

Geeignete Lösungsmittel für Verfahrensstufe c) sind die, wie sie weiter vorne in Verfahrensstufe a) eingesetzt werden.

Bevorzugt erfolgt die Umsetzung der in Verfahrensstufe c) in wässrigem Medium.

Bevorzugt setzt man in Verfahrensstufe c) die nach Verfahrensstufe b) erhaltene Alkylphosphonsäuren, deren Ester und/oder Alkalisalze (III) mit Metallverbindungen von Li, Na, K, Mg, Ca, Al, Ti, Zn oder Fe zu den Alkylphosphonsäuresalzen (III) dieser Metalle um.

Die Umsetzung erfolgt dabei in einem Molverhältnis von Alkylphosphonsäure/-ester/ -salz (III) zu Metall von 8 zu 1 bis 1 zu 3 (für vierwertige Metallionen oder Metalle mit stabiler vierwertiger Oxidationsstufe), von 6 zu 1 bis 1 zu 3 (für dreiwertige Metallionen oder Metalle mit stabiler dreiwertiger Oxidationsstufe), von 4 zu 1 bis 1 zu 3 (für zweiwertige Metallionen oder Metalle mit stabiler zweiwertiger Oxidationsstufe) und von 3 zu 1 bis 1 zu 4 (für einwertige Metallionen oder Metalle mit stabiler einwertiger Oxidationsstufe).

Bevorzugt führt man in Verfahrenstufe b) erhaltenes Alkylphosphonsäureester/-salz (III) in die entsprechende Alkylphoshonsäure über und setzt in Verfahrensstufe c) diese mit Metallverbindungen von Li, Na, K, Mg, Ca, Al, Ti, Zn oder Fe zu den Alkylphosphonsäuresalzen (III) dieser Metalle um.

Bevorzugt wandelt man in Verfahrenstufe b) erhaltene Alkylphosphonsäure/-ester in ein Alkylphoshonsäure-Alkalisalz um und setzt in Verfahrensstufe c) dieses mit Metallverbindungen von Li, Na, K, Mg, Ca, Al, Ti, Zn oder Fe zu den Alkylphosphonsäuresalzen (III) dieser Metalle um.

Bevorzugt handelt es sich bei den Metallverbindungen von Li, Na, K, Mg, Ca, Al, Ti, Zn oder Fe für Verfahrenstufe c) um Metalle, Metalloxide, -hydroxide, -oxid-hydroxide, -borate, -carbonate, -hydroxocarbonate, -hydroxocarbonathydrate, gemischte -hydroxocarbonate, gemischte -hydroxocarbonathydrate, -phosphate, -sulfate, -sulfathydrate, -hydroxosulfathydrate, gemischte -hydroxosulfathydrate, -oxysulfate, -acetate, -nitrate, -fluoride, -fluoridhydrate, -chloride, -chloridhydrate, -oxychloride, -bromide, -iodide, -iodidhydrate, -carbonsäurederivate und/oder -alkoxide.

Bevorzugt erfolgt die Umsetzung in Verfahrensstufe c) von Alkylphosphonsäuren und/oder deren Salzen mit Metallverbindungen von Li, Na, K, Mg, Ca, Al, Ti, Zn oder Fe zu den Alkylphosphonsäuresalzen dieser Metalle bei einem Feststoffgehalt der Alkylphosphonsäuresalze dieser Metalle von 0,1 bis 95 Gew.-%, bevorzugt 5 bis 70 Gew.-%.

Bevorzugt erfolgt die Umsetzung in Verfahrensstufe c) bei einer Temperatur von 20 bis 250 °C, bevorzugt bei einer Temperatur von 80 bis 120 °C.

Bevorzugt erfolgt die Umsetzung in Verfahrensstufe c) bei einem Druck zwischen 0,01 und 1.000 bar, bevorzugt 0,1 bis 100 bar.

Bevorzugt erfolgt die Umsetzung in Verfahrensstufe c) während einer Reaktionszeit von 1*10⁻⁷ bis 1.000 h.

Bevorzugt wird das nach der Verfahrensstufe c) durch Filtrieren und/oder Zentrifugieren aus dem Reaktionsgemisch abgetrennte Alkylphosphonsäuresalz (III) getrocknet.

Bevorzugt wird das nach Verfahrensstufe b) erhaltene Produktgemisch ohne weitere Reinigung mit den Metallverbindungen umgesetzt.

Bevorzugte Lösungsmittel sind die in Verfahrensschritt a) genannten Lösungsmittel.

Bevorzugt ist die Umsetzung in Verfahrensstufe b) und/oder c) im durch Stufe a) gegebenen Lösungsmittelsystem.

Bevorzugt ist die Umsetzung in Verfahrensstufe c) in einem modifizierten gegebenen Lösungsmittelsystem. Hierfür werden acide Komponenten, Lösevermittler, Schauminhibitoren etc. zugegeben.

In einer weiteren Ausführungsform des Verfahrens wird das nach Verfahrensstufe a) und/oder b) erhaltene Produktgemisch aufgearbeitet.

In einer weiteren Ausführungsform des Verfahrens wird das nach Verfahrensstufe b) erhaltene Produktgemisch aufgearbeitet und danach die nach Verfahrensstufe b) erhaltenen Alkylphosphonsäuren und/oder deren Salze oder Ester (III) in Verfahrensstufe c) mit den Metallverbindungen umgesetzt.

Bevorzugt wird das Produktgemisch nach Verfahrensstufe b) aufgearbeitet, indem die Alkylphosphonsäuren und/oder deren Salze oder Ester (III) durch Entfernen des Lösungsmittelsystems isoliert werden, z. B. durch Eindampfen.

Bevorzugt weist das Alkylphosphonsäuresalz (III) der Metalle Li, Na, K, Mg, Ca, Al, Ti, Zn oder Fe wahlweise
eine Restfeuchte von 0,01 bis 10 Gew.-%, bevorzugt von 0,1 bis 1 Gew.-%,
eine mittlere Teilchengröße von 0,1 bis 2.000 µm, bevorzugt von 10 bis 500 µm,
eine Schüttdichte von 80 bis 800 g/l, bevorzugt von 200 bis 700 g/l,
eine Rieselfähigkeit nach Pfrengle von 0,5 bis 10, bevorzugt von 1 bis 5, auf.

Insbesondere betrifft die Erfindung die Verwendung der erfindungsgemäßen Alkylphosphonsäure/-ester/-salze (III) als Säurefänger.

Werden Gemische der Alkylphosphonsäuresalze (III) mit "klassischen Säurefängern" eingesetzt, so sind die "klassischen Säurefänger" bevorzugt Hydrotalcite, C₁₂₋C₃₆-Carboxylate, Oxide, Hydroxide und/oder Carbonate der Metalle Na, Mg, Ca oder Zn, wie beispielsweise Hydrotalcit, Natriumstearat, Magnesiumstearat, Cacliumstearat, Zinkstearat, Magnesiumoxid, Calciumoxid, Zinkoxid oder Calciumcarbonat.

Gemische der Alkylphosphonsäuresalze (III) mit "klassischen Säurefängern" werden in einem Verhältnis von 5-95 Gew.-% Alkylphosphonsäuresalze (III) und 95-5 Gew.-% "klassischer Säurefänger", bevorzugt 20-80 Gew.-% Alkylphosphonsäuresalze (III) und 80-20 Gew.-% "klassischer Säurefänger", mehr bevorzugt 30-70 Gew.-% Alkylphosphonsäuresalze (III) und 70-30 Gew.-% "klassischer Säurefänger", besonders bevorzugt 40-60 Gew.-% Alkylphosphonsäuresalze (III) und 60-40 Gew.-% "klassischer Säurefänger" eingesetzt.

Alkylphosphonsäuresalze (III) und Gemische der Alkylphosphonsäuresalze (III) mit "klassischen Säurefängern" werden dem Polymer in einem Verhältnis von 0,0001 bis 5 Gew.-%, bevorzugt 0,01 bis 2 Gew.-%, mehr bevorzugt 0,025 bis 1 Gew.-% und besonders bevorzugt 0,05 bis 0,5 Gew.-% bezogen auf das jeweilige Polymer zugesetzt.

Die Alkylphosphonsäuresalze (III) und Gemische der Alkylphosphonsäuresalze (III) mit "klassischen Säurefängern" werden dem Polymer bevorzugt am Ende des Herstellungs-prozesses, bei der Auf- und Weiterverarbeitung, bei der Herstellung von Formkörpern und Formmassen zugesetzt.

Die Alkylphosphonsäuresalze (III) und Gemische der Alkylphosphonsäuresalze (III) mit "klassischen Säurefängern" werden bevorzugt als Pulver, Granulate, Kompaktate oder Extrudate in fester, flüssiger, geschmolzener, gelöster oder dispergierter Form ggf. zusammen mit anderen Additiven, wie z.B. Antioxidantien, Antistatica, Treibmitteln, weiteren Flammschutzmitteln, Hitzestabilisatoren, Schlagzähmodifikatoren, Prozesshilfsmitteln, Gleitmitteln, Lichtschutzmitteln, Antidrippingmitteln, Compatibilizern, Verstärkungsstoffen, Füllstoffen, Keimbildungsmitteln, Nukleierungsmitteln, Additiven zur Lasermarkierung, Hydrolysestabilisatoren, Kettenverlängerern, Farbpigmenten, Weichmachern, Flammschutzmitteln und/oder Plastifizierungsmitteln und Lösungsmitteln eingesetzt.

Die erfindungsgemäßen Alkylphosphonsäuresalze (III) erweisen sich als effiziente Säurefänger für Polymere bei gleichzeitig gesteigerten Verarbeitungseigenschaften des Polymers bezüglich Homogenität und keinerlei Anzeichen von Ausblühungen, Flecken-, Streifen- oder Schlierenbildung. Zudem ist die Bildung von Ablagerungen an Düsen- und Rollwerkzeugen minimiert.

Die Erfindung betrifft zudem die Verwendung der erfindungsgemäßen Alkylphosphonsäure/-ester/-salze (III) als Flammschutzmittel bzw. als Zwischenstufe zur Herstellung von Flammschutzmitteln für Polymere.

Bevorzugt enthalten die durch Alkylphosphonsäure/-ester/-salze (III) flammgeschützen thermoplastischen oder duroplastischen Formkörper und -massen, -Filme, -Fäden und -Fasern 5 bis 30 Gew.-% der Alkylphosphonsäure/-ester/-salze (III), hergestellt nach einem oder mehreren der Ansprüche 1 bis 7, 5 bis 80 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Bevorzugt ist ein Flammschutzmittel, enthaltend 0,1 bis 90 Gew.-% der Alkylphosphonsäure/-ester/-salze (III) und 0,1 bis 50 Gew.-% weitere Additive.

Bevorzugt handelt es sich bei den Additiven um: Antioxidantien, Antistatica, Treibmittel, weitere Flammschutzmittel, Hitzestabilisatoren, Schlagzähmodifikatoren, Prozesshilfsmittel, Gleitmittel, Lichtschutzmittel, Antidrippingmittel, Compatibilizer, Verstärkungsstoffe, Füllstoffe, Keimbildungsmittel, Nukleierungsmittel, Additive zur Lasermarkierung, Hydrolysestabilisatoren, Kettenverlängerer, Farbpigmente, Weichmacher und/oder Plastifizierungsmittel.

Bevorzugte Additive sind auch Aluminiumtrihydrat, Antimonoxid, bromierte aromatische oder cycloaliphatische Kohlenwasserstoffe, Phenole, Ether, Chlorparaffin, Hexachloro-cyclopentadien-Addukte, Roter Phosphor, Melaminderivate, Melamincyanurate, Ammoniumpolyphosphate und Magnesiumhydroxid. Bevorzugte Additive sind auch weitere Flammschutzmittel, insbesondere Salze von Dialkylphosphinsäuren.

### Beispiele bevorzugter Polymere sind:

1. Polymere von Mono- und Diolefinen (z. B. Ethylen ,Propylen, iso-Butylen, Buten, 4-Methylpenten, Isopren, Butadien, Styrol), wie z. B. Polypropylen, Polyisobutylen, Polybut-1-en, Poly-4-methylpent-1-en, Polystyrol, Poly-(p-methylstyrol) und/oder Poly-(alpha-methylstyrol), Polyisopren oder Polybutadien, und Polyethylen (ggf. vernetzt), wie z. B. Polyethylen mit hoher Dichte (HDPE), Polyethylen mit hoher Dichte und hohem Molekulatgewicht (HDPE-HMW), Polyethylen mit hoher Dichte und ultrahohem Molekulatgewicht (HDPE-UHMW), Polyethylen mit mittlerer Dichte (HMDPE), Polyethylen mit niedriger Dichte (LDPE), linerarem Polyethylen mit niedriger Dichte (LLDPE), Polyethylen mit sehr niedriger Dichte (VLDPE), verzweigtes Polyethylen mit niedriger Dichte (BLDPE), auch Polymere von Cycloolefinen, wie z. B. von Cyclopenten oder Norbornen.
2. Gemische (Blends) der unter 1. aufgeführten Polymere, wie z. B. Polypropylen mit Polyisobutylen, Polyethylen mit Polyisobutylen, Polypropylen mit Polyethylen (z. B. PP/HDPE/LDPE) und Gemische verschiedener Polyethylentypen (z. B. LDPE/HDPE).
3. Copolymere von Mono- und Diolefinen miteinander und von Mono- und Diolefinen mit anderen vinylischen Monomeren, wie z. B. Ethylen-Propylen-Copolymere; LLDPE, VLDPE und Gemische hiervon mit LDPE; Propylen-But-1-en-Copolymere,Propylen-iso-Butylen-Copolymere, Ethylen-But-1-en-Copolymere, Ethylen-Hexen-Copolymere, Ethylen-Methylpenten-Copolymere, Ethylen-Hepten-Copolymere, Ethylen-Octen-Copolymere, PropylenButadien-Copolymere, iso-Butylen-Isopren-Copolymere, Ethylen-Alkylacrylat-Copolymere, Ethylen-Alkylmethacrylat-Copolymere, Ethylen-Vinylacetat-Copolymere, Copolymere von Styrol oder alpha-Methylstyrol mit Dienen oder Acrylderivaten, wie z. B. Styrol-Butadien, Styrol-Acrylnitril, Styrol-Alkyl-methacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol, auch Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als so genannte ABS-, MBS-, ASA- oder AES-Polymere bekannt sind; auch deren Copolymere mit Kohlenmonoxid oder Ethylen-Acrylsäure-Copolymere und deren Salze (Ionomere) und auch Terpolymere von Ethylen mit Propylen und einem Dien wie z. B. Hexadien, Dicyclopentadien oder Ethylidennorbornen; und Gemische solcher Copolymere miteinander und/oder unter 1. genannten Polymere, z. B. Polypropylen-Ethylene-Propylen-Copolymer, LDPE-Ethylen-Vinylacetat-Copolymer, LDPE-Ethylen-Acrylsäure-Copolymer, LLDPE-Ethylen-Vinylacetat-Copolymer, LLDPE-Ethylen-Acrylsäure-Copolymer, und alternierende oder statistische Polyalkylen-Kohlenmonoxid-Copolymere und Gemische hiervon mit anderen Polymeren, wie beispielsweise Polyamiden.
4. Polymere von ungesättigten Alkoholen oder Aminen oder die Acylderivate oder Acetale hiervon, wie z. B. Polyvinylalkohole, Polyvinylacetate, Polyvinylstearate, Polyvinylbenzoate, Polyvinylmaleate, Polyvinylbutyrate, Polyallylphthalate oder Polyallylmelamine; und auch deren Copolymere mit unter 1. genannten Olefinen.
5. Polyacetale wie z. B. Polyoxymethylen und solche Polyoxymethylene, die Comonomere, wie z. B. Ethylenoxide, enthalten; auch Polyacetale modifiziert mit thermoplastischen Polyurethanen, Acrylaten oder MBS.
6. Polyphenylenoxide und -sulfide, und Gemische hiervon mit Styrolpolymeren oder Polyamiden.
7. Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10 , Polyamid 11, Polyamid 12; aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, lonomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
8. Polyurea, Polyimide, Polyamidimide, Polyetherimide, Polyesteramide, Polyhydantoine und Polybenzimidazole.
9. Polyester, die sich von Dicarbonsäuren und deren Ester und Diolen und/oder von Hydroxycarbonsäuren, bevorzugt Terephthalsäure und Ethylenglykol, Propan-1,3-diol und Butan-1,3-diol, oder den entsprechenden Lactonen ableiten, wie z. B. Polyethylen-terephthalat, Polybutylenterephthalat, Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.
10. Polycarbonate und Polyestercarbonate.
11. Polysulfone, Polyethersulfone und Polyetherketone.
12. Vernetzte Polymere, die sich von Aldehyden mit Phenolen, Urea oder Melaminen ableiten, wie z. B. Phenol/Formaldehyd-Harz, Urea/Formaldehyd-Harz und Melamine/Formaldehyd-Harz.
13. Alkyd-Harze.
14. Ungesättigte Polyester-Harze, die sich von Copolyestern von gesättigten und ungesättigten Dicarbonsäuren mit mehrwertigen Alkoholen und vinylischen Verbindungen als Vernetzungsmittel ableiten.
15. Gemische (Blends) der zuvor genannten Polymere, wie z. B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/Thermoplastisches PUR, PC/Thermoplastisches PUR, POM/Acrylate, POM/MBS, PPO/MBS, PPO/HIPS, PPO/PA 6.6 und Copolymere, PA/HDPE, PA/PP, PA/PPO, PBT/ABS oder PBT/PET/PC.
16. Natürliche und synthetische organische Substanzen, die reine Monomere oder Gemische davon bilden, wie z. B. Mineralöl, tierische oder pflanzliche Fette, Öle und Wachse, Wachse und Fette, die auf synthetischen Estern basieren (z. B. Phthalate, Adipate, Phosphate or Trimellitate), und auch Blends von synthetischen Estern mit Mineralölen in jeglicher erwünschten Zusammensetzung.

Die Erfindung wird durch die nachstehenden Beispiele erläutert.

Herstellung, Verarbeitung und Prüfung von flammgeschützten Polymerformmassen und flammgeschützten Polymerformkörpern

Die Flammschutzkomponenten werden mit dem Polymergranulat und evtl. Additiven vermischt und auf einem Doppelschnecken-Extruder (Typ Leistritz LSM^{®} 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0 kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende
V-1 kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0
V-2 Zündung der Watte durch brennendes Abtropfen, übrige Kriterien wie bei V-1 nicht klassifizierbar (nkl) erfüllt nicht die Brandklasse V-2.

### Eingesetzte Chemikalien und Abkürzungen

| | |
|---|---|
| VE-Wasser | voll-entsalztes Wasser |
| AIBN | Azo-bis-(isobutyronitril), (Fa. WAKO Chemicals GmbH) |
| WakoV65 | 2,2'-Azobis(2,4-dimethyl-valeronitril), |
| | (Fa. WAKO Chemicals GmbH) |
| Deloxan^{®} THP II | Metallfänger (Fa. Evonik Industries AG) |

### Beispiel 1

Bei Raumtemperatur werden in einem Dreihalskolben mit Rührer und Intensivkühler 188 g Wasser vorgelegt und unter Rühren und Durchleiten von Stickstoff entgast. Dann werden unter Stickstoff 0,2 mg Palladium(II)sulfat und 2,3 mg Tris(3-sulfo-phenyl)phosphin Trinatriumsalz hinzugegeben und gerührt, dann 66 g Phosphinsäure in 66 g Wasser zugegeben. Die Reaktionslösung wird in einen 2 I-Büchi-Reaktor überführt und unter Rühren und unter Druck mit Ethylen beschickt und das Reaktionsgemisch auf 80 °C geheizt. Nach einer Ethylenaufnahme von 28 g wird abgekühlt und freies Ethylen abgelassen. Das Reaktionsgemisch wird am Rotationsverdampfer vom Lösungsmittel befreit. Der Rückstand wird mit 100 g VE-Wasser versetzt und bei Raumtemperatur unter Stickstoffatmosphäre gerührt, dann filtriert und das Filtrat mit Toluol extrahiert, danach wird am Rotationsverdampfer vom Lösungsmittel befreit und die erhaltene Ethylphosphonigsäure aufgefangen. Man erhält 92 g (98 % der Theorie) Ethylphosphonigsäure.

### Beispiel 2

Analog Beispiel 1 werden 99 g Phosphinsäure, 63 g Propen, 6,9 mg Tris(dibenzyliden-aceton)dipalladium und 9,5 mg 4,5-Bis(diphenylphosphino)-9,9-dimethylxanthen in 400 g Tetrahydrofuran reagiert. Man erhält 157 g (97 % der Theorie) Propylphosphonigsäure.

### Beispiel 3

Analog Beispiel 1 werden 99 g Phosphinsäure, 84 g Buten, 8,7 mg Bis(dibenzyliden-aceton)palladium und 9,1 mg 1,1'-Bis(diphenylphosphino)ferrocen in 400 g Butanol reagiert. Man erhält 173 g (96 % der Theorie) Butylphosphonigsäure.

### Beispiel 4

Analog Beispiel 1 werden 99 g Phosphinsäure, 156 g Styrol, 8,7 mg Bis(dibenzyliden-aceton)palladium und 5,7 mg 4,6-Bis(diphenylphosphino)-phenoxazin in 400 g Acetonitri reagiert. Man erhält 240 g (94 % der Theorie) 2-Phenylethylphosphonig-säure.

### Beispiel 5

Analog Beispiel 1 werden 99 g Phosphinsäure, 84 g i-Buten, 8,7 mg Bis(dibenzyliden-aceton)palladium und 9,5 mg 4,5-Bis(diphenylphosphino)-9,9-dimethylxanthen in 400 g Butanol reagiert. Man erhält 151 g (84 % der Theorie) i-Butylphosphonigsäure.

### Beispiel 6

99 g (0,75 mol) Phosphinsäure, 86 g (0,76 mol) Octen, 34 mg Tris(dibenzylidenaceton)dipalladium und 48 mg 4,5-Bis(diphenylphosphino)-9,9-dimethylxanthen werden in 750 g Tetrahydrofuran 9 Stunden bei ca. 70 °C reagiert, dann zur Reinigung über eine mit Deloxan^{®} THP II beschickte Säule gegeben und am Rotationsverdampfer vom Lösungsmittel befreit. Der Rückstand wird mit 500 g VE-Wasser versetzt und gerührt, dann filtriert und das Filtrat mit Ethylacetat extrahiert. Danach wird am Rotationsverdampfer vom Lösungsmittel befreit. Man erhält 117 g (84 % der Theorie) Octylphosphonigsäure.

### Beispiel 7

Analog Beispiel 6 werden 66 g (0.5 mol) Phosphinsäure, 114,5 g (0,5 mol) Hexadecen, 23 mg Tris(dibenzylidenaceton)dipalladium und 32 mg 4,5-Bis(diphenylphosphino)-9,9-dimethylxanthen werden in 500 g Tetrahydrofuran reagiert, zur Reinigung über eine mit Deloxan^{®} THP II beschickte Säule gegeben und am Rotationsverdampfer vom Lösungsmittel befreit. Der Rückstand wird mit 500 g VE-Wasser versetzt und gerührt, dann filtriert und der Rückstand mit Kaltem Wasser und Aceton gewaschen. Man erhält 127 g (81 % der Theorie) Hexadecylphosphonigsäure.

### Beispiel 8

Analog Beispiel 7 werden 66 g (0.5 mol) Phosphinsäure, 140,0 g (0,5 mol) Octadecen, 23 mg Tris(dibenzylidenaceton)dipalladium und 32 mg 4,5-Bis(diphenylphosphino)-9,9-dimethylxanthen in 500 g Tetrahydrofuran reagiert und aufgearbeitet. Man erhält 157 g (85 % der Theorie) Octadecylphosphonigsäure.

### Beispiel 9

Wie in Beispiel 1 werden 99 g Phosphinsäure, 396 g Butanol, 42 g Ethylen, 6,9 mg Tris(dibenzylidenaceton)dipalladium und 9,5 mg 4,5-Bis(diphenylphosphino)-9,9-dimethylxanthen umgesetzt, dann zur Reinigung über eine mit Deloxan^{®} THP II beschickte Säule gegeben und danach nochmal n-Butanol zugegeben. Bei einer Reaktionstemperatur von 80 - 110 °C wird das gebildete Wasser durch Azeotropdestillation entfernt. Das Produkt (Ethylphosphonigsäurebutylester) wird durch Destillation bei vermindertem Druck gereinigt. Ausbeute: 189 g (84 % der Theorie).

### Beispiel 10

Wie in Beispiel 1 werden 198 g Phosphinsäure, 198 g Wasser, 84 g Ethylen, 6,1 mg Palladium(II)sulfat und 25,8 mg 9,9-Dimethyl-4,5-bis(diphenylphosphino)-2,7-sulfonato-xanthen Dinatriumsalz umgesetzt, dann zur Reinigung über eine mit Deloxan^{®} THP II beschickte Säule gegeben und danach n-Butanol zugegeben. Bei einer Reaktions-temperatur von 80 - 110 °C wird das gebildete Wasser durch Azeotropdestillation entfernt. Das Produkt (Ethylphosphonigsäurebutylester) wird durch Destillation bei vermindertem Druck gereinigt. Ausbeute: 374 g (83 % der Theorie).

### Beispiel 11

In einem 500 ml-Fünfhalskolben mit Gaseinleitungsrohr, Thermometer, Intensivrührer und Rückflusskühler mit Gasverbrennung werden 94 g (1 mol) Ethylphosphonigsäure (hergestellt wie in Beispiel 1) vorgelegt. Bei Raumtemperatur wird Ethylenoxid eingeleitet. Unter Kühlung wird eine Reaktionstemperatur von 70°C eingestellt und noch eine Stunde bei 80 °C nachreagiert. Die Ethylenoxidaufnahme beträgt 65,7 g. Die Säurezahl des Produktes ist kleiner 1 mg KOH/g. Es werden 129 g (94 % der Theorie) (Ethylphosphonigsäure-2-hydroxyethylester) als farbloses, wasserklares Produkt erhalten.

### Beispiel 12

9,4 g (0,1 mol) Ethylphosphonigsäure (hergestellt wie in Beispiel 1) werden in 150 ml Wasser gelöst und mit 2N NaOH-Lösung auf pH 9 gebracht. Anschließend werden 0,45 g Aktivkohle mit 5 % Pt und 1 % Bi hinzugefügt, die Suspension auf 70 °C erwärmt und Luft (10 l/h) durch die Suspension geleitet. Hierbei wird pH der Suspension durch Zugabe von 2N NaOH-Lösung auf pH = 9 gehalten. Nach Beendigung der Reaktion wird die Reaktionslösung von dem Katalysator filtriert, gewaschen, mit Salzsäure sauer gestellt und das Wasser im Vakuum abdestilliert. Der Rückstand wird in Tetrahydro-furan aufgenommen und extrahiert. Die unlöslichen Salze werden abfiltriert. Es werden 10,7 g (97 % der Theorie) Ethylphosphonsäure als farbloser Feststoff erhalten.

### Beispiel 13

29,0 g (0,1 mol) Hexadecylphosphonigsäure (hergestellt wie in Beispiel 7) werden in 150 ml Wasser suspendiert und bei ca. 30 °C 30 %ige Wasserstoffperoxidlösung mit einer Flussrate von 1 Moläquivalent pro Stunde in die Suspension geleitet. Nach Beendigung der Reaktion nach 6 Stunden wird die Reaktionslösung filtiert und der Rückstand im Vakuum getrocknet. Es werden 29,7 g (97 % der Theorie) Hexadecylphosphonsäure als farbloser Feststoff erhalten.

### Beispiel 14

15,0 g (0,1 mol) i-Butylphosphonigsäure (hergestellt wie in Beispiel 5) in 500 ml Aceton werden mit 0,11 mol Jones-Reagenz (12,7 g Chrom-trioxid in 36,7 ml Wasser und 11,0 ml konz. Schwefelsäure) bei 0 °C tropfenweise versetzt. Die Reaktionsmischung wird noch 3 1/2 Stunden bei Eiskühlung und 1 Stunde bei Raumtemperatur gerührt. Nach Zugabe von 12 ml Isopropanol wird auf Eis/Wasser gegeben. Anschließend werden leichtflüchtige Bestandteile im Vakuum abdestilliert. Der Rückstand wird in Tetrahydrofuran aufgenommen und extrahiert. Unlösliche Salze werden abfiltriert und das Lösungsmittel des Filtrats im Vakuum abgetrennt. Nach chromatographischer Reinigung werden 13,8 g (83 % der Theorie) i-Butylphosphonsäure als Öl erhalten

### Beispiel 15

Eine wässrige Lösung von 220 g (2 mol) Ethylphosphonsäure (hergestellt wie in Beispiel 12) wird mit ca. 160 g einer 50 %igen wässrigen Lösung von Natriumhydroxid umgesetzt und das Wasser im Vakuum abdestilliert. Es wurden 302 g (98 % der Theorie) Ethylphosphonsäure Di-Natriumsalz als farbloser Feststoff erhalten.

### Beispiel 16

306 g (1 mol) Hexadecylphosphonsäure (hergestellt wie in Beispiel 13) werden in 1,5 l Hexan suspendiert und 200 ml einer 10 molaren Lösung von Natriumhydroxid hinzugefügt; die Suspension 2 Stunden unter Rückfluss erhitzt und Wasser durch Azeotropdestillation entfernt. Die Reaktionslösung wird filtiert und der Rückstand mit Wasser und Hexan gewaschen und im Vakuum getrocknet. Es werden 340 g (97 % der Theorie) Hexadecylphosphonsäure Di-Natriumsalz als farbloser Feststoff erhalten.

### Beispiel 17

Analog Beispiel 16 werden 306 g (1 mol) Hexadecylphosphonsäure (hergestellt wie in Beispiel 13) und 100 ml einer 10 molaren Lösung von Natriumhydroxid in 1,5 l Hexan reagiert. Es werden 320 g (98 % der Theorie) Hexadecylphosphonsäure Mono-Natriumsalz als farbloser Feststoff erhalten.

### Beispiel 18

306 g (1 mol) Hexadecylphosphonsäure (hergestellt wie in Beispiel 13) werden in 1,5 l Hexan suspendiert und 200 ml einer 10 molaren Lösung von Natriumhydroxid hinzugefügt und die Suspension 2 Stunden unter Rückfluss erhitzt. Anschließend werden 500 ml einer 1 molaren Lösung von Calciumchlorid hinzugefügt, die Suspension 4 Stunden unter Rückfluss erhitzt und Wasser durch Azeotropdestillation entfernt. Die Reaktionslösung wird filtiert und der Rückstand mit Wasser und Hexan gewaschen und im Vakuum getrocknet. Es werden 313 g (96 % der Theorie) Hexadecylphosphonsäure Calciumsalz als farbloser Feststoff erhalten.

### Beispiel 19

660 g (6 mol) Ethylphosphonsäure (hergestellt wie in Beispiel 12) werden in 860 g Wasser gelöst und in einem 5 I-Fünfhalskolben mit Thermometer, Rückflusskühler, Intensivrührer und Tropftrichter vorgelegt und mit ca. 960 g (12 mol) 50 %ige Natriumhydroxid-Lösung neutralisiert. Bei 85 °C wird eine Mischung von 2583 g einer 46 %igen wässrigen Lösung von Al₂(SO₄)₃·14 H₂O zugefügt. Anschließend wird der erhaltene Feststoff abfiltriert, mit heißem Wasser gewaschen und bei 130 °C im Vakuum getrocknet. Ausbeute: 718 g (95 % der Theorie) Ethylphosphonsäure Aluminium(III)salz als farbloses Salz.

### Beispiel 20

165 g (1,5 mol) Ethylphosphonsäure (hergestellt wie in Beispiel 12) werden bei 85 °C in 400 ml Toluol gelöst und mit 444 g (6 mol) Butanol versetzt. Bei einer Reaktionstemperatur von ca. 100 °C wird das gebildete Wasser durch Azeotropdestillation entfernt. Durch Destillation bei vermindertem Druck werden 296 g (89 % der Theorie) Ethylphosphonsäurebutylester erhalten.

### Beispiel 21

Hexadecylphosphonsäure Mono- und Di-Natriumsalze (Säurefänger) werden in den in der unten stehenden Tabelle angegebenen Konzentrationen einer LLDPE-Schmelze (erhalten durch Ziegler-Natta-Polymerisation) als Suspension in Isopar zugesetzt. Das erhaltene Polymer wurde Extrudiert und granuliert. Um den Wirkungsgrad der Säurefänger darzustellen wurde die HCl-Konzentration im Abgas des LLDPE-Produktionsprozesses durch Dräger-Röhrchen, die Acidität des Polymers durch alkalimetrische Titration des gemahlenen Polymers und die Korrosivität des Polymers an Stahlplatten durch Bestimmung des Korrsionsindex ermittelt.

| Produkt | Konzentration Säurefänger [Gew.-%] | HCl, im Abgas [ppm] | Acidität des Polymeres [ppm HCl] | Korrosions-index |
|---|---|---|---|---|
| Hexadecylphosphonsäure Di-Natriumsalz, Bsp. 16 | 0.05 | 19 | 0.05 | 0 |
| Hexadecylphosphonsäure Di-Natriumsalz, Bsp 16 | 0.10 | 3.5 | 0.05 | 0.03 |
| Hexadecylphosphonsäure mono-Natriumsalz, Bsp. 17 | 0.10 | 1.8 | 0.01 | 0 |
| Hexadecylphosphonsäure Calciumsalz, Bsp 18 | 0.10 | 4.5 | 0.05 | 0.06 |
| Calciumstearat | 0.10 | 32 | 0.2 | 0.3 |

Die Ergebnisse bezüglich der Konzentration an HCl im Abgas als auch im Polymer zeigen deutlich, dass die erfindungsgemässen Hexadecylphosphonsäure Natriumsalze gegenüber dem "klassischen Säurefänger" Calciumstearat signifikant bessere Neutralisationseigenschaften besitzt. Veranschaulicht durch die niedrigeren Korosionsindexe werden die Apparaturen gegenüber dem Stand der Technik zudem deutlich mehr geschont.

### Beispiel 22

Eine Mischung von 50 Gew.-% Polybutylenterephthalat, 20 Gew.-% Ethylphosphonsäure Aluminium(III)salz (hergestellt wie in Beispiel 19) und 30 Gew.-% Glasfasern werden auf einem Doppelschnecken-Extruder (Typ Leistritz LSM 30/34) bei Temperaturen von 230 bis 260 °C zu einer Polymerformmasse compoundiert. Der homogenisierte Polymerstrang wurde abgezogen, im Wasserbad gekühlt und anschließend granuliert.
Nach Trocknung werden die Formmassen auf einer Spritzgießmaschine (Typ Aarburg Allrounder) bei 240 bis 270 °C zu Polymerformkörpern verarbeitet und eine UL-94 Klassifizierung von V-1 bestimmt.

## Patentansprüche

1. Verfahren zur Herstellung von Alkylphosphonsäuren, -estern und -salzen, **dadurch gekennzeichnet, dass** man
a) eine Phosphinsäurequelle (I) 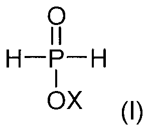 mit Olefinen (IV) 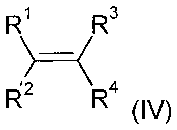 in Gegenwart eines Katalysators A zu einer Alkylphosphonigsäure, deren Salz oder Ester (II) 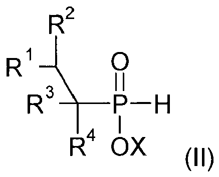 umsetzt,
b) die so entstandene Alkylphosphonigsäure, deren Salz oder Ester (II) mit einem Oxidationsmittel oder mit einem Oxidationsmittel und Wasser, wobei es sich bei den Oxidationsmitteln um Braunstein, Chromtrioxid, Kaliumdichromat, Pyridindichromat, Pyridinchlorchromat, Collins-Reagenz, Jones-Reagenz, Corey-Gilman-Ganem-Reagenz, (Dess-Martin)Periodinan, o-Iodoxy-benzoesäure, Rutheniumtetroxid, Rutheniumdioxid, Tetra-n-propyl-perruthenat, Rutheniumtrichlorid/Natriumperiodat, Rutheniumdioxid/Natrium-periodat, Hypochlorit, Persäuren und/oder Peroxo-Verbindungen handelt, zum Alkylphosphonsäurederivat (III) 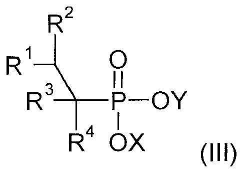 umsetzt oder die nach Schritt a) erhaltene Alkylphosphonigsäure, deren Salz oder Ester (II) und/oder die nach Schritt b) erhaltene Alkylphosphonsäure, deren Salz oder Ester (III) und/oder die jeweils resultierende Reaktionslösung davon mit einem Alkylenoxid oder einem Alkohol M-OH und/oder M'-OH verestert, und der jeweils entstandene Alkylphosphonigsäureester (II) und/oder Alkylphosphonsäureester (III) dem weiteren Reaktionsschritt b) unterwirft, wobei R¹, R², R³, R⁴ gleich oder verschieden sind und unabhängig voneinander H, Methyl, Ethyl, n-Propyl, Isopropyl, n-Butyl, Isobutyl, tert. Butyl und/oder Phenyl bedeuten, und X und Y gleich oder verschieden sind und unabhängig voneinander H, Methyl, Ethyl, n-Propyl, Isopropyl, n-Butyl, Isobutyl, tert. Butyl, Phenyl, Ethylenglykol, Propylglykol, Butylglykol, Pentylglykol, Hexylglykol, Allyl und/oder Glycerin bedeuten, und/oder für Mg, Ca, Al, Sb, Sn, Ge, Ti, Fe, Zr, Zn, Ce, Bi, Sr, Mn, Cu, Ni, Li, Na, K und/oder eine protonierte Stickstoffbase stehen und es sich bei den Katalysatoren A und B um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen.

2. Verfahren nach Anspruch 1, **dadurch gekennzeichnet, dass** man die nach Schritt b) erhaltene Alkylphosphonsäure, deren Salz oder Ester (III) anschließend in einem Schritt c) mit Metallverbindungen von Mg, Ca, Al, Sb, Sn, Ge, Ti, Fe, Zr, Zn, Ce, Bi, Sr, Mn, Li, Na, K und/oder einer protonierte Stickstoffbase zu den entsprechenden Alkylphosphonsäuresalzen (III) dieser Metalle und/oder einer Stickstoffverbindung umsetzt.

3. Verfahren nach einem oder mehreren der Ansprüche 1 bis 2, **dadurch gekennzeichnet, dass** X und Y gleich oder verschieden sind und jeweils H, Li, Na, K, Ca, Mg, Al, Zn, Ti und/oder Fe bedeuten.

4. Verfahren nach einem oder mehreren der Ansprüche 1 bis 3, **dadurch gekennzeichnet, dass** es sich bei den Übergangsmetallen und/oder Übergangsmetallverbindungen um solche aus der ersten, siebten und achten Nebengruppe handelt.

5. Verfahren nach einem oder mehreren der Ansprüche 1 bis 4, **dadurch gekennzeichnet, dass** es sich bei den Übergangsmetallen und/oder Übergangsmetallverbindungen um Rhodium, Nickel, Palladium, Platin, Ruthenium und/oder Gold handelt.

6. Verfahren nach einem oder mehreren der Ansprüche 1 bis 5, **dadurch gekennzeichnet, dass** es bei dem Alkohol der allgemeinen Formel M-OH um lineare oder verzweigte, gesättigte und ungesättigte, einwertige organische Alkohole mit einer Kohlenstoffkettenlänge von C₁-C₁₈ und es bei dem Alkohol der allgemeinen Formel M'-OH um lineare oder verzweigte, gesättigte und ungesättigte, mehrwertige organische Alkohole mit einer Kohlenstoffkettenlänge von C₁-C₁₈ handelt.

7. Herstellung von Alkylphosphonsäuren, -estern und -salzen nach einem oder mehreren der Ansprüche 1 bis 6 und anschließende Verwendung dieser Produkte als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, als Säurefänger, als Flammschutzmittel, in Wasch- und Reinigungsmittelanwendungen und in Elektronikanwendungen.

8. Herstellung von Alkylphosphonsäuresalzen (III) und Gemischen der Alkylphosphonsäuresalzen (III) mit "klassischen Säurefängern" nach einem oder mehreren der Ansprüche 1 bis 6 und anschließende Verwendung dieser Produkte als Säurefänger in einem Polymer und einem Verhältnis von 0,0001 bis 5 Gew.-%, bezogen auf das jeweilige Polymer.

9. Herstellung von Alkylphosphonsäuren/-ester/-salzen (III) nach einem oder mehreren der Ansprüche 1 bis 6 und anschließende Verwendung dieser Produkte in flammgeschützen thermoplastischen oder duroplastischen Formkörper und -massen, -Filme, -Fäden und -Fasern in einem Verhältnis von 5 bis 30 Gew.-% der Alkylphosphonsäure/-ester/-salze (III), 5 bis 80 Gew.-% Polymer oder Mischungen derselben, 5 bis 40 Gew.-% Additive und 5 bis 40 Gew.-% Füllstoff, wobei die Summe der Komponenten 100 Gew.-% beträgt.

## Claims

1. A method for producing alkylphosphonic acids, esters and salts, which comprises
a) reacting a phosphinic acid source (I) 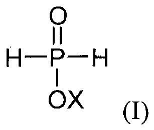 with olefins (IV) 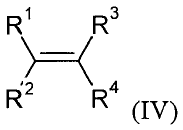 in the presence of a catalyst A to form an alkylphosphonous acid, salt or ester (II) 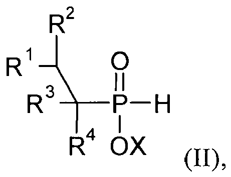
b) reacting the resulting alkylphosphonous acid, salt or ester (II) with an oxidant or with an oxidant and water, wherein the oxidants are manganese dioxide, chromium trioxide, potassium dichromate, pyridine dichromate, pyridine chlorochromate, Collins reagent, Jones reagent, Corey-Gilman-Ganem reagent, (Dess-Martin)periodinane, o-iodoxybenzoic acid, ruthenium tetroxide, ruthenium dioxide, tetra-n-propyl perruthenate, ruthenium trichloride/sodium periodate, ruthenium dioxide/sodium periodate, hypochlorite, peracids and/or peroxo compounds, to form the alkylphosphonic acid derivative (III) 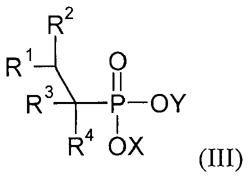 or the alkylphosphonous acid, salt or ester (II) obtained after step a) and/or the alkylphosphonic acid, salt or ester (III) obtained after step b) and/or the particular resulting reaction solution thereof are esterified with an alkylene oxide or an alcohol M-OH and/or M'-OH, and the respectively resulting alkylphosphonous ester (II), and/or alkylphosphonic ester (III) are subjected to the further reaction step b), where R¹, R², R³, R⁴ are identical or different and are each independently H, methyl, ethyl, n-propyl, isopropyl, n-butyl, isobutyl, tert-butyl and/or phenyl, and X and Y are identical or different and are each independently H, methyl, ethyl, n-propyl, isopropyl, n-butyl, isobutyl, tert-butyl, phenyl, ethylene glycol, propyl glycol, butyl glycol, pentyl glycol, hexyl glycol, allyl and/or glycerol, and/or Mg, Ca, Al, Sb, Sn, Ge, Ti, Fe, Zr, Zn, Ce, Bi, Sr, Mn, Cu, Ni, Li, Na, K and/or a protonated nitrogen base and the catalysts A and B comprise transition metals and/or transition metal compounds and/or catalyst systems composed of a transition metal and/or transition metal compound and at least one ligand.

2. The method according to claim 1 wherein the alkylphosphonic acid, its salt or ester (III) obtained after step b) is subsequently reacted in a step c) with metal compounds of Mg, Ca, Al, Sb, Sn, Ge, Ti, Fe, Zr, Zn, Ce, Bi, Sr, Mn, Li, Na, K and/or a protonated nitrogen base to form the corresponding alkylphosphonic acid salts (III) of these metals and/or of a nitrogen compound.

3. The method according to one or more of claims 1 to 2 wherein X and Y are identical or different and are each H, Li, Na, K, Ca, Mg, Al, Zn, Ti and/or Fe.

4. The method according to one or more of claims 1 to 3 wherein the transition metals and/or transition metal compounds comprise such from the first, seventh and eighth transition groups.

5. The method according to one or more of claims 1 to 4 wherein the transition metals and/or transition metal compounds comprise rhodium, nickel, palladium, platinum, ruthenium and/or gold.

6. The method according to one or more of claims 1 to 5 wherein the alcohol of the general formula M-OH comprises linear or branched, saturated and unsaturated, monohydric organic alcohols having a carbon chain length of C₁-C₁₈ and the alcohol of the general formula M'-OH comprises linear or branched, saturated and unsaturated polyhydric organic alcohols having a carbon chain length of C₁-C₁₈.

7. A preparation of alkylphosphonic acids, esters and salts according to one or more of claims 1 to 6 and subsequent use of these products as an intermediate for further syntheses, as a binder, as a crosslinker or accelerant to cure epoxy resins, polyurethanes and unsaturated polyester resins, as polymer stabilizers, as crop protection agents, as a sequestrant, as a mineral oil additive, as a corrosion control agent, as an acid scavenger, as a flame retardant, in washing and cleaning applications and in electronic applications.

8. A preparation of alkylphosphonic acid salts (III) and mixtures of alkylphosphonic acid salts (III) with "classic acid scavengers" according to one or more of claims 1 to 6 and subsequent use of these products as an acid scavenger in a polymer and a ratio of 0.0001% to 5% by weight, based on the particular polymer.

9. A preparation of the alkylphosphonic acids/esters/salts (III) according to one or more of claims 1 to 6 and subsequent use of these products in flame-retardant thermoplastic or thermoset molded articles and composites, films, threads and fibers in a ratio of 5% to 30% by weight of the alkylphosphonic acid/ester/salts (III), 5% to 80% by weight of polymer or mixtures of them, 5% to 40% by weight of additives and 5% to 40% by weight of filler, wherein the sum total of the components is 100% by weight.

## Revendications

1. Procédé de fabrication d'acides, d'esters et de sels alkylphosphoniques, **caractérisé en ce que**
a) une source d'acide phosphinique (I) 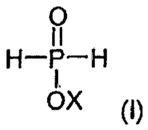 est mise en réaction avec des oléfines (IV) 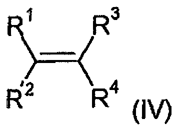 en présence d'un catalyseur A pour former un acide alkylphosphoneux, son sel ou ester (II) 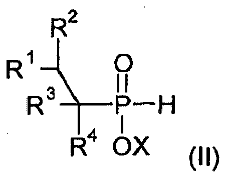
b) l'acide alkylphosphoneux, son sel ou ester (II) ainsi formé est mis en réaction avec un oxydant ou avec un oxydant et de l'eau, les oxydants étant la pyrolusite, le trioxyde de chrome, le dichromate de potassium, le dichromate de pyridine, le chlorochromate de pyridine, le réactif de Collins, le réactif de Jones, le réactif de Corey-Gilmann-Ganem, la périodinane (de Dess-Martin), l'acide o-iodoxy-benzoïque, le tétroxyde de ruthénium, le dioxyde de ruthénium, le perruthénate de tétra-n-propyle, le trichlorure de ruthénium/periodate de sodium, le dioxyde de ruthénium/periodate de sodium, l'hypochlorite, des peracides et/ou des composés peroxo, pour former le dérivé d'acide alkylphosphonique (III) 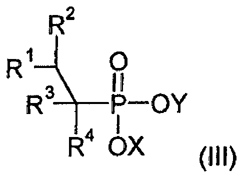 ou l'acide alkylphosphoneux, son sel ou ester (II) obtenu à l'étape a) et/ou l'acide alkylphosphonique, son sel ou ester (III) obtenu à l'étape b) et/ou la solution réactionnelle résultante respective de ceux-ci sont estérifiés avec un oxyde d'alkylène ou un alcool M-OH et/ou M'-OH, et l'ester d'acide alkylphosphoneux (II) et/ou l'ester d'acide alkylphosphonique (III) respectivement formés sont soumis à l'étape de réaction b) ultérieure, R¹, R², R³, R⁴ étant identiques ou différents et signifiant indépendamment les uns des autres H, méthyle, éthyle, n-propyle, isopropyle, n-butyle, isobutyle, tert.-butyle et/ou phényle, et X et Y étant identiques ou différents et signifiant indépendamment l'un de l'autre H, méthyle, éthyle, n-propyle, isopropyle, n-butyle, isobutyle, tert.-butyle, phényle, éthylène glycol, propylglycol, butylglycol, pentylglycol, hexylglycol, allyle et/ou glycérine, et/ou représentant Mg, Ca, Al, Sb, Sn, Ge, Ti, Fe, Zr, Zn, Ce, Bi, Sr, Mn, Cu, Ni, Li, Na, K et/ou une base azotée protonée, et les catalyseurs A et B étant des métaux de transition et/ou des composés de métaux de transition et/ou des systèmes catalytiques composés d'un métal de transition et/ou d'un composé de métal de transition et d'au moins un ligand.

2. Procédé selon la revendication 1, **caractérisé en ce que** l'acide alkylphosphonique, son sel ou ester (III) obtenu à l'étape b) est ensuite mis en réaction lors d'une étape c) avec des composés métalliques de Mg, Ca, Al, Sb, Sn, Ge, Ti, Fe, Zr, Zn, Ce, Bi, Sr, Mn, Li, Na, K et/ou d'une base azotée protonée pour former les sels d'acides alkylphosphoniques (III) correspondants de ces métaux et/ou d'un composé azoté.

3. Procédé selon une ou plusieurs des revendications 1 à 2, **caractérisé en ce que** X et Y sont identiques ou différents et signifient chacun H, Li, Na, K, Ca, Mg, Al, Zn, Ti et/ou Fe.

4. Procédé selon une ou plusieurs des revendications 1 à 3, **caractérisé en ce que** les métaux de transition et/ou les composés de métaux de transition sont du premier, septième et huitième groupe de transition.

5. Procédé selon une ou plusieurs des revendications 1 à 4, **caractérisé en ce que** les métaux de transition et/ou les composés de métaux de transition sont le rhodium, le nickel, le palladium, le platine, le ruthénium et/ou l'or.

6. Procédé selon une ou plusieurs des revendications 1 à 5, **caractérisé en ce que** l'alcool de formule générale M-OH correspond à des alcools organiques monovalents linéaires ou ramifiés, saturés et insaturés, d'une longueur de chaîne carbonée de C₁-C₁₈, et l'alcool de formule générale M'-OH correspond à des alcools organiques polyvalents linéaires ou ramifiés, saturés et insaturés, d'une longueur de chaîne carbonée de C₁-C₁₈.

7. Fabrication d'acides, d'esters et de sels alkylphosphoniques selon une ou plusieurs des revendications 1 à 6 et utilisation ultérieure de ces produits en tant que produit intermédiaire pour des synthèses ultérieures, en tant que liant, en tant qu'agent de réticulation ou accélérateur lors du durcissement de résines époxy, de polyuréthanes et de résines de polyester insaturées, en tant que stabilisateur de polymères, en tant qu'agent protecteur de plantes, en tant qu'agent séquestrant, en tant qu'additif pour huile minérale, en tant qu'agent anticorrosion, en tant que capteur d'acide, en tant qu'agent ignifuge, dans des applications de détergents et dans des applications électroniques.

8. Fabrication de sels d'acides alkylphosphoniques (III) et de mélanges des sels d'acides alkylphosphoniques (III) avec des « capteurs d'acides classiques » selon une ou plusieurs des revendications 1 à 6 et utilisation ultérieure de ces produits en tant que capteur d'acides dans un polymère et en un rapport de 0,0001 à 5 % en poids, par rapport au polymère en question.

9. Fabrication d'acides/d'esters/de sels alkylphosphoniques (III) selon une ou plusieurs des revendications 1 à 6 et utilisation ultérieure de ces produits dans des corps moulés, des matériaux de moulage, des films, des fils et des fibres thermoplastiques ou duroplastiques ignifugés en un rapport de 5 à 30 % en poids des acides/esters/sels alkylphosphoniques (III), 5 à 80 % en poids de polymère ou ses mélanges, 5 à 40 % en poids d'additifs et 5 à 40 % en poids de charges, la somme des composants étant de 100 % en poids.
